# EUROPÄISCHE PATENTANMELDUNG

(11) **EP 1 220 135 A2**
(43) Veröffentlichungstag der Anmeldung: **03.07.2002**
(21) Anmeldenummer: 01130826.9
(22) Anmeldetag: 27.12.2001
(51) Int. Cl.: G06F 19/00

(54) **Verfahren zum Berechnen von chemisch selbstreproduzierenden Systemen**

(30) Priorität: 29.12.2000 DE 10065650
(71) Anmelder: Goldenbeld-Zilker, Helmut, 65189 Wiesbaden (DE)
(72) Erfinder: Goldenbeld-Zilker, Helmut, 65189 Wiesbaden (DE)
(74) Vertreter: Lieke, Winfried, Dr.

(57) **Zusammenfassung**

Die vorliegende Erfindung betrifft ein Verfahren zum Berechnen von chemisch sich selbst reproduzierenden Systemen. Um ein Verfahren zur Berechnung von chemisch sich selbst reproduzierenden Prozessen anzugeben, mit dessen Hilfe entsprechende biologische Reproduktionsvorgänge im Detail nachvollziehbar bzw. unmittelbar auf einen mathematisch darstellbaren Verfahrensablauf abbildbar sind, wird erfindungsgemäß vorgeschlagen: das Bereitstellen von Operanden in Form zweier paralleler Befehlsschienen, wobei die auf den beiden Befehlsschienen jeweils einander gegenüberliegenden Befehlspaare aus zueinander komplementären Befehlen bestehen, von denen in einem gegebenen Prozeß höchstens einer ausführbar ist; das Bereitstellen eines Satzes von Operatoren, wobei der Satz von Operatoren mindestens die folgenden Operatoren umfaßt: a) einen Duplikationsoperator (D0), der den Operanden verdoppelt, b) mindestens zwei Drehoperatoren (D1, D2), die jeweils eine Drehung des Operanden um eine erste bzw. eine zweite Achse um je einen vorgebbaren Winkel bewirken, wobei jeder der Drehoperatoren (D1, D2) jeweils nur einer der Befehlsschienen der Operanden zugeordnet ist und die Anwendung eines der Drehoperatoren auf einen oder mehrere Befehle zu einem anschließenden Wechsel der Befehlsschiene führt.

## Beschreibung

Die vorliegende Erfindung betrifft ein Verfahren zum Berechnen von chemisch sich selbstreproduzierenden Systemen.

In biochemischen bzw. biologischen Systemen, aber auch in der anorganischen Chemie sind Systeme bekannt, bei welchen, unter Umständen durch Änderung äußerer Parameter, ein System dazu angeregt wird, sich selbst zu duplizieren bzw. zu reproduzieren. Derartige Systeme sind nur sehr schwierig theoretisch zu beschreiben und sie sind im allgemeinen auch nicht vollständig verstanden. Zwar ist allgemein bekannt, daß die Erbinformationen nahezu sämtlicher Lebewesen bzw. biologischer Systeme in Form von sogenannter DNA (Desoxiribonukleinsäure) gespeichert sind, jedoch ist nur zum Teil bekannt, wie diese in praktisch jeder Zelle eines lebendigen Körpers gespeicherte Information im Einzelfall umgesetzt wird, um daraus einen kompletten, vielzelligen und differenzierten Organismus zu reproduzieren. Dabei nennt man die Gesamtheit der ein Lebewesen bzw. eine Art kennzeichnenden Erbinformationen (,die auf verschiedene, sog. "Chromosomen verteilt sein kann) das "Genom" der betreffenden Spezies.

Es ist bereits bekannt, daß bestimmten Merkmalen und differenzierten Bereichen eines Organismus relativ eindeutig bestimmte Abschnitte des betreffenden Genoms zuzuordnen sind. Auch die biochemischen Vorgänge, die bei der Aktivierung und Deaktivierung bestimmter Genabschnitte ablaufen, sind zumindest teilweise bekannt. Dennoch ist es selbst im Falle relativ einfacher Lebewesen bisher nicht möglich, auch bei Kenntnis seines vollständigen Genoms die bei der Reproduzierung durch Zellteilung und Differenzierung ablaufenden Prozesse im Detail nachzuvollziehen und auf biochemischer Basis vorherzusagen oder vorauszuberechnen.

Ausgehend von diesem Stand der Technik liegt der vorliegenden Erfindung die Aufgabe zugrunde, ein Verfahren zur Berechnung von chemisch sich selbst reproduzierenden Prozessen anzugeben, mit dessen Hilfe entsprechende biologische Reproduktionsvorgänge im Detail nachvollziehbar bzw. unmittelbar auf einen mathematisch darstellbaren Verfahrensablauf abbildbar sind.

Diese Aufgabe wird durch ein Verfahren gelöst, welches durch die folgenden Merkmale gekennzeichnet ist:
- Bereitstellen von Operanden in Form zweier paralleler Befehlsschienen, wobei die auf den beiden Befehlsschienen jeweils einander gegenüberliegenden Befehlspaare aus zueinander komplementären Befehlen bestehen, von denen in einem gegebenen Prozeß höchstens einer ausführbar ist
- Bereitstellen eines Satzes von Operatoren, wobei der Satz von Operatoren mindestens die folgenden Operatoren umfaßt:
   a) einen Duplikationsoperator (D), der den Operanden verdoppelt,
   b) mindestens zwei Drehoperatoren (D1, D2), die jeweils eine Drehung des Operanden um eine erste bzw. eine zweite Achse um je einen vorgebbaren Winkel bewirken,
- wobei jeder der Drehoperatoren (D1, D2) jeweils nur einer der Befehlsschienen der Operanden zugeordnet ist und die Anwendung eines der Drehoperatoren zu einem anschließenden Wechsel der Befehlsschiene und neben einer Drehung wahlweise auch zur Ausführung eines oder mehrerer Befehle führt.

Dieses Verfahren ist besonders geeignet, um die beim Entstehen und Wachsen von lebenden Zellen auf molekularer Ebene ablaufenden Vorgänge im Detail nachvollziehen und mathematisch abbilden zu können. Bekanntermaßen bestehen DNA-Stränge aus zwei parallelen Reihen sogenannter Basen, wobei jeweils drei aufeinanderfolgende Basen, die als "Codon" oder auch als "Triplett" bezeichnet werden, jeweils für eine Aminosäure codieren und eine Reihe derartige Codons oder Tripletts ein bestimmtes Protein definiert. Wie bereits erwähnt, gibt es insgesamt nur vier verschiedene Basen, wobei zu jeder der Basen genau eine andere komplementär ist, so daß man zwei, bzw. unter Berücksichtigung der Reihenfolge vier, verschiedene Basenpaare und aus diesen Basenpaaren wiederum eine große Anzahl verschiedener Tripletts bilden kann, wobei eine lange Kette derartiger Basenpaare die beiden Stränge einer DNA bildet. Durch bestimmte biologische Botenstoffe werden einzelne, aus einer Reihe von Tripletts bestehende Abschnitte jeweils nur eines der beiden parallelen Stränge aktiviert und bilden somit ein bestimmtes Protein. Andere Abschnitte der DNA sind in konkreten Situationen, d.h. bei der Ausbildung bestimmter differenzierter Zellen, inaktiv. Weiterhin vermehren sich einzelne Zellen durch Teilung, wobei die gesamte DNA dupliziert wird, auch wenn die Bildung der für die betreffende Zelle charakteristischen Proteine nur durch ganz bestimmte Abschnitte der DNA bewirkt wird.

All diese Vorgänge können durch das erfindungsgemäße Verfahren unmittelbar abgebildet werden. Der Operator D0 dupliziert die DNA oder Abschnitte derselben, wie es beispielsweise bei der Zellteilung geschieht. Der Operator D1 aktiviert die nachfolgenden Befehle (welche den Tripletts entsprechen), bis zu einem vorgebbaren Punkt, der zum Beispiel durch einen weiteren Operator definiert sein kann. Grundsätzlich ist mit der Anwendung eines Operators D1 oder D2 auch immer ein Wechsel der Codierschiene bzw. Befehlsschiene verbunden. Wenn man beispielsweise der Einfachheit halber den Doppelstrang einer DNA als einen linken und rechten Strang charakterisiert, und wenn man weiterhin annimmt, daß der Operator D1 immer auf den linken Strang wirkt und der Operator D2 immer auf den rechten Strang wirkt, so bedeutet die vorstehende Vorschrift, daß nach der Anwendung des Operators D1 auf einen Abschnitt des linken Stranges ein Wechsel auf die rechte Seite des Stranges erfolgt, was bedeutet, daß bei dem durch D1 replizierten Prozeß bzw. der auf diese Weise replizierten DNA nunmehr ein Abschnitt des rechten Stranges aktiviert ist, der für andere Aminosäuren und Proteine codiert ist als der gegenüberliegende Teil des linken Stranges. Alle jeweils hinter einem der Operatoren angeordneten Tripletts bzw. Codons werden ausgeführt bis zu dem nächstfolgenden Operator. Dieser nächstfolgende Operator kann entweder ein auf dem anderen Strang angeordneter Operator oder ein auf demselben Strang angeordneter Operator D0 sein, der nichts weiter tut als den bisher vorhandenen Doppelstrang nochmals zu kopieren, ohne jedoch die Codierschiene zu wechseln. Wenn auf die Operatoren D1, D2 keine weiteren Befehle folgen, so beschränkt sich ihre Wirkung auf eine Kopie mit Drehung und Wechsel der Codierschiene (Replizierung).

Während der vorstehend beschriebene Minimalsatz von Operatoren bereits ausreicht, um wesentliche Wachstumsvorgänge einschließlich der Zelldifferenzierung und der damit verbundenen Exprimierung unterschiedlicher Aminosäuren im Rahmen eines Modells zu erklären bzw. abzubilden. führt die Hinzufügung eines Stopoperators (ST) dazu, daß das modellhaft beschriebene biologische System ein in sich abgeschlossenes System wird und kein permanent fortgesetztes Wachstum zeigt. Die Hinzufügung des Stopoperators bewirkt, daß bei Abarbeitung des in einem linearen Doppelstrang codierten Programms nach einer vorbestimmten Zahl von Wachstumsschritten und Verdoppelungen irgendwann eine Beendigung dieses Wachstums eintritt, was der Situation entspricht, daß die ausdifferenzierten Zellen eines Organs keine weitere Wachstumsvermehrung zeigen, wenn das Organ fertig ausgebildet ist und seine genetisch vorgesehene Größe erreicht hat.

Das Fehlen eines Stopoperators könnte dagegen modellhaft das unkontrollierte Wachstum beschreiben, wie es beispielsweise Krebszellen zeigen, ohne daß dies die einzige Form der Beschreibung von Krebswachstum sein müßte.

Zweckmäßigerweise ist auch ein weiterer Operator (Aufhebungsoperator) vorgesehen, der die Wirkung des vorangehenden Operators wieder aufhebt. Dies bedeutet effektiv, daß durch die Kombination eines der Operatoren D1, D2 mit einem Aufhebungsoperator nichts anderes bewirkt als einen Sprung entlang der Codierschiene auf eine andere Position, wobei die übersprungenen Teile inaktiv sind. Je nachdem, ob auf einen der Operatoren D1, D, eine Reihe von Tripletts folgt und je nachdem, ob die Wirkung eines der Operatoren D1, D2 aufgehoben wird oder nicht, unterscheidet sich der aus einem ursprünglichen DNA-Doppelstrang replizierte neue Strang dadurch, daß ein anderer Abschnitt der DNA aktiviert ist bzw. die Codierungsseite gewechselt worden ist. Die zusätzliche Anwendung des Aufhebungsoperators ist dann im Ergebnis nichts anderes als ein Sprungbefehl an eine andere Position des doppelten Befehlsstranges bzw. DNA-Stranges.

Auf diese Weise läßt sich das Aktivieren und Deaktivieren beliebiger Abschnitte der DNA lediglich mit Hilfe der genannten Operatoren D0, D1, D2 und gegebenenfalls noch des Aufhebungsoperators N simulieren, so daß jeder Reproduktions- und Wachstumsprozeß im Prinzip allein auf diese Weise darstellbar ist. Für eine vollständige Abbildung eines realen Wachstumsprozesses bedarf es dann lediglich noch der Zuordnung der aktivieren Genabschnitte zu den daraus hergestellten Proteinen und Zelltypen.

Im Ergebnis liefert das sehr simple System einfacher Operatoren, angewendet auf ein System von Operanden, welches lediglich aus einem Doppelstrang von Einzelbefehlen besteht, wobei abschnittweise nur eine Seite des Stranges aktiviert ist, eine vollständige Darstellungsmöglichkeit sämtlicher Zellteilungs- und -wachstumsprozesse, einschließlich einer Vermehrung eines Zelltyps sowie der Differenzierung in unterschiedliche Zelltypen, wobei jede Zelle nach wie vor denselben kompletten Satz von Befehlen in Form des Doppelstranges behält. Die vorliegende Erfindung ist damit ein sehr nützliches Werkzeug, wenn es darum geht, konkret gewonnene Forschungsergebnisse und in der Forschung gewonnene Detailerkenntnisse über die Wirkungsweise und Zuordnung einzelner Genabschnitte in einem größeren Zusammenhang zu überprüfen und die Folgeprozesse modellhaft ablaufen zu lassen bzw. zu berechnen. Die sich aus der Berechnung ergebenden Ergebnisse können dann mit im Experiment beobachteten Resultaten verglichen werden; wodurch sich die Vermutungen bezüglich Wirkungsweise und Zuordnung der Genabschnitte bestätigen oder verwerfen lassen, und wodurch komplexe Prozesse überhaupt erst überschaubar und praktisch handhabbar werden.

Die Erfindung wird nachstehend anhand eines stark vereinfachten und auf wesentliche Elemente reduzierten Beispieles erläutert. Dabei sind die doppelsträngigen Befehlsketten als "Prozeß" bezeichnet und die einzelnen Verdopplungs- bzw. Differenzierungsschritte, die zu denselben Doppelsträngen, jedoch mit anderen aktivierten Abschnitten führen, sind entsprechend durchnumeriert. Der aus der Genetik bekannt Vierbuchstabencode wird hier durch die Bezeichnungen T1, T2, T3 und T4 wiedergegeben, wobei T1/T3 und T2/T4 wechselseitig zueinander komplementär sind. In die Ketten eingefügt sind außerdem die Aktivierungs- und Drehoperatoren D1, D2, sowie der einfache Duplikationsoperator D0 und der Stopoperator ST. Letzterer wird insbesondere im Zusammenhang mit dem ebenfalls beigefügten Anhang A erläutert.

In Anhang B werden spezielle Anordnungen der Operatoren D0, D1 und D2 sowie deren Wirkung im dreidimensionalen Raum erläutert. Anhang C zeigt, daß das vorliegende mathematische Modell von Chromosomen als linearer Doppelstrang von Befehlsketten mit einem kleinen Satz von Grundlängenoperatoren ausreicht, um die auf der Basis von Erfahrungswerten aufgestellten Vererbungslehren und Mendelschen Gesetze zu erklären und zu reproduzieren.

Im Unterschied zu dem nachstehend erläuterten Beispiel, bei welchem der aus der Genetik bekannte Vierbuchstabencode durch die Bezeichnungen T1, T2, T3 und T4 ersetzt wurde und die genannten Buchstaben paarweise zueinander komplementär sind, wird in den Anhängen A bis D, die als Teil der Beschreibung anzusehen sind, eine vereinfachte und verkürzte Darstellung gewählt, indem die Großbuchstaben TTT und die Kleinbuchstaben ttt jeweils für einen beliebig langen DNA-Abschnitt stehen, der für jeweils ein bestimmtes Protein codiert, wobei die Abschnitte TTT und ttt jeweils zueinander komplementär sein sollen und wobei bestimmte DNA-Abschnitte Sonderbezeichnungen wie LIL (mit dem komplementären lil) und ROT (mit dem komplementären rot) besondere Eigenschaften bzw. die Codierung für besondere Proteine hervorheben sollen, um anhand dieser besonderen Eigenschaften das Reproduzieren der Mendelschen Gesetze nachzuweisen. Im übrigen können die Bezeichnungen TTT (bzw. ttt) für beliebige und nicht immer dieselben DNA-Abschnitte stehen.

In Anhang D wird außerdem noch gezeigt, daß das vorliegende mathematische Modell ohne Hinzufügung irgendwelcher weiterer Operatoren zwanglos auch Erbkrankheiten, wie z.B. Monosomie und Trisomie erklären bzw. abbilden kann.

Beispiel für eine Folge von Replizieren und Duplizieren.

Gegeben sei für den Prozeß P1 folgende Abfolge von Operationen, ,x' bedeutet der Operator ist ausgeführt worden. D0 ist der Operator, der den Prozeß verdoppelt.D1 bzw. D2 Replizieren, der Einfachheit halber soll T1 das Komplement zu T3, T2 das Komplement zu T4 und umgekehrt sein. Ferner soll bei jeder Duplikation und Replikation eine Drehung unbestimmten Winkels im Raum vollzogen werden (geradzahliger,und ungeradzahliger Nachfolger), dann sieht obiger Prozess P1 folgend aus:

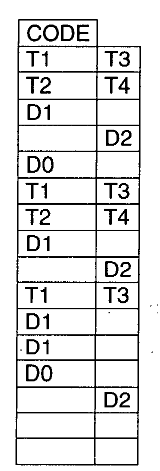

Geometrisch kann die Folge der Replikationen in der Ebene folgendermaßen abgebildet werden. Sei A die linke Codierschiene und B die rechte Codierschiene

### Anfangszustand:

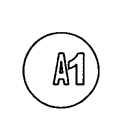

1. .Replikation D1 auf der linken Seite wird ausgeführt. 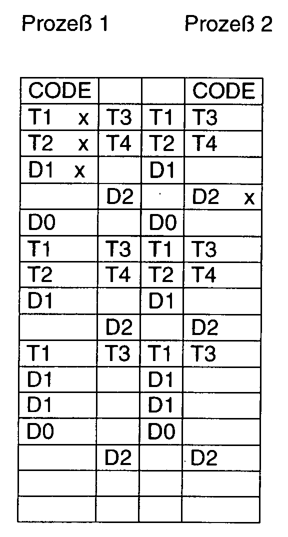
   Das ergibt geometrisch folgendes Bild. 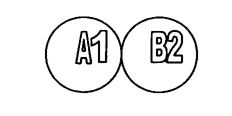
   A soll die linke Seite der Codierung und B die rechte Seite der Codierung darstellen. Die Zahl hinter dem Buchstaben die Prozeßnummer.
2. Replikation , Ausführung von D2 auf der rechten Seite des 2. Prozesses führt zur folgenden Situation. 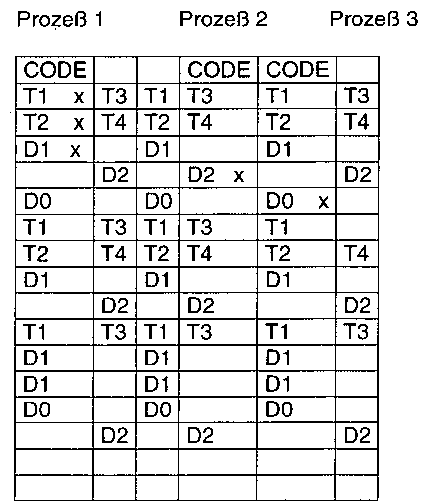
   Geometrisch kann man sich das nun so vorstellen. 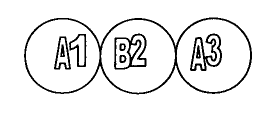
3.und 4. Duplikation im Prozeß 1 und Prozeß 3 führt zur Situation. Es erfolgt wegen dem D0-Operator kein Wechsel der Codierung. Erzeugt wird Prozeß 4 und 5. 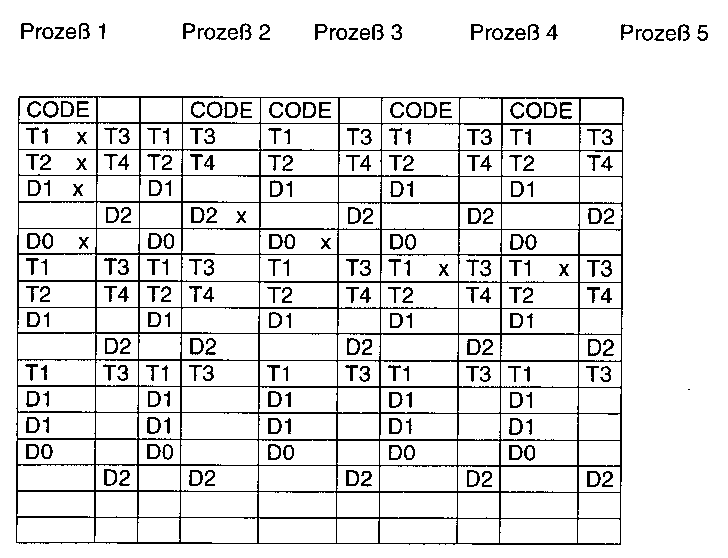
   Die geometrische Ausprägung könnte etwa folgende Formation annehmen. 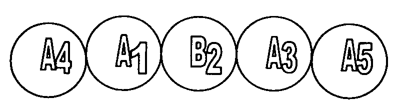
5., 6.,7. und 8. Replikation im Prozeß 1, 3, 4 und Prozeß 5 führt zur Situation. Erzeugt werden Prozesse 6, 7, 8 und 9 . 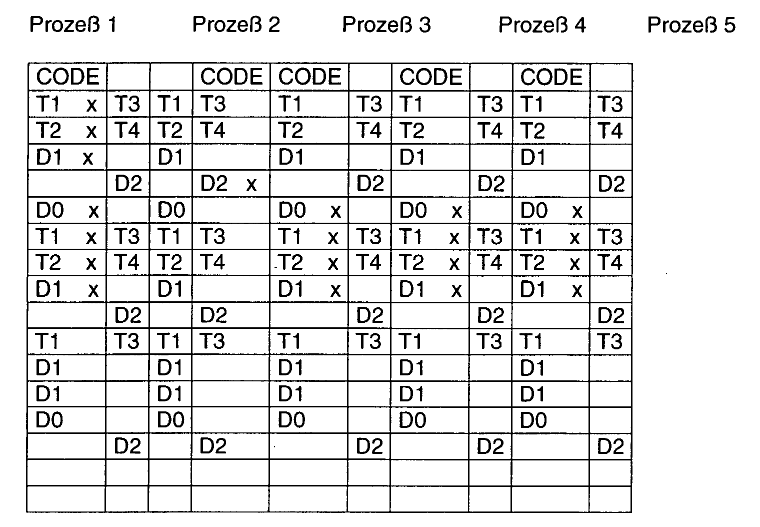 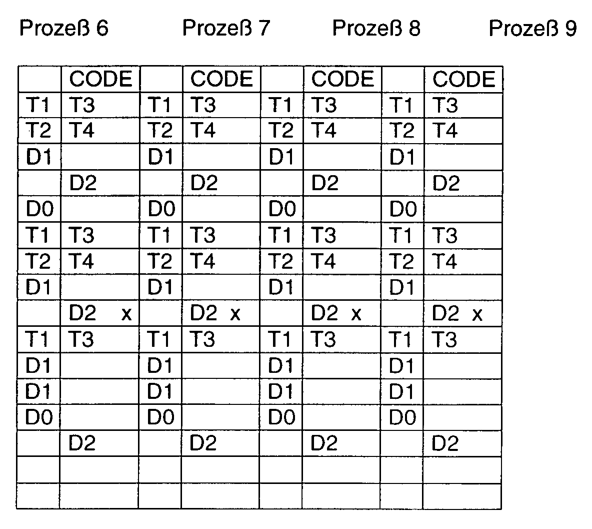
   Dies könnte zur folgenden Formation führen. 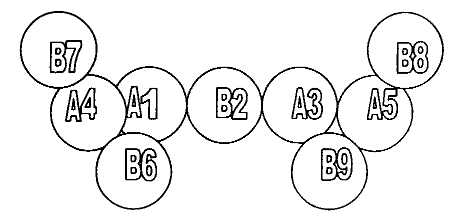 Die weiteren Replikationen:
9.10,11,und 12. Replikation im Prozeß 6,7,8 und Prozeß 9 führt zur Situation. 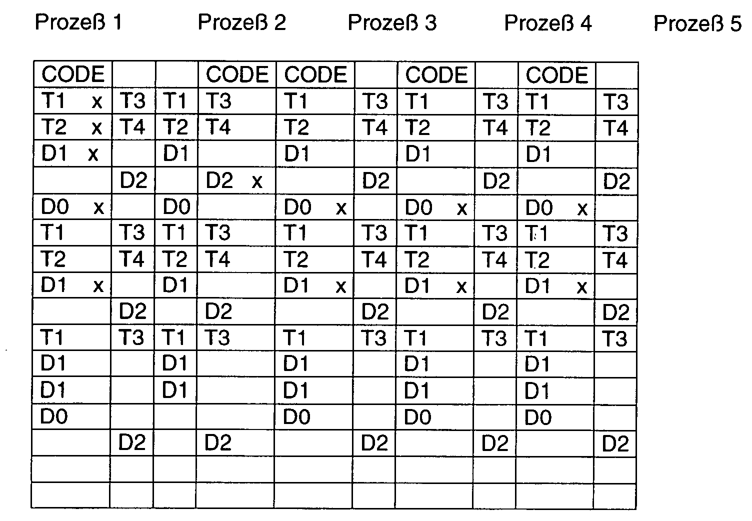 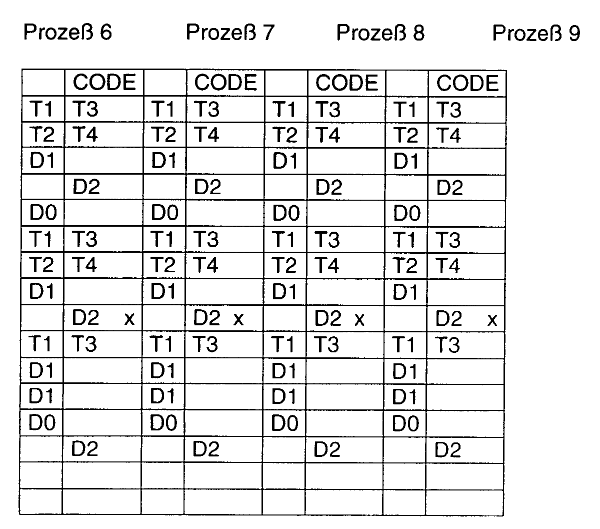
   Erzeugte Prozesse sind: 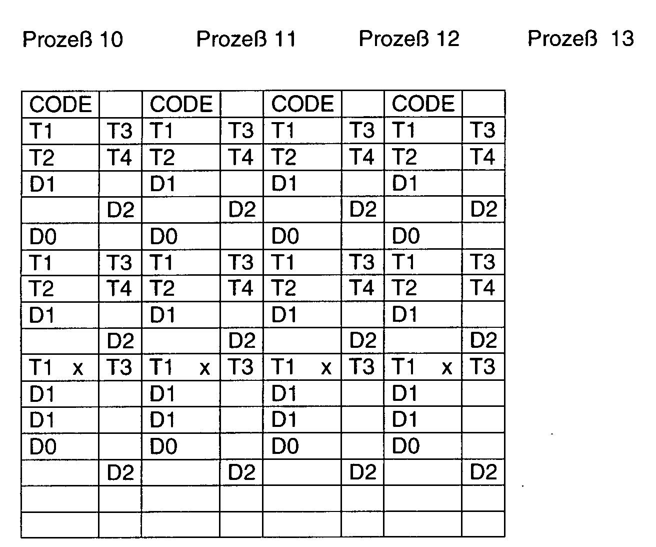
   Im folgenden Verlauf soll nun die Abfolge von Prozeß 10 aufgezeichnet werden. Der Prozeß 10 erzeugt Prozeß 14 mit Codierung B. Prozeß 10 erzeugt aber auch Prozeß 15 mit Codierungswechsel, und Prozeß 16 ohne die Codierung zu wechseln (D0-Operation), im weiteren Verlauf wird aus Prozeß 14 und 15 , der Prozeß 17 und 18 erzeugt. Man beachte die fünf Endstücke die aus Prozeß 10 hervorgehen.

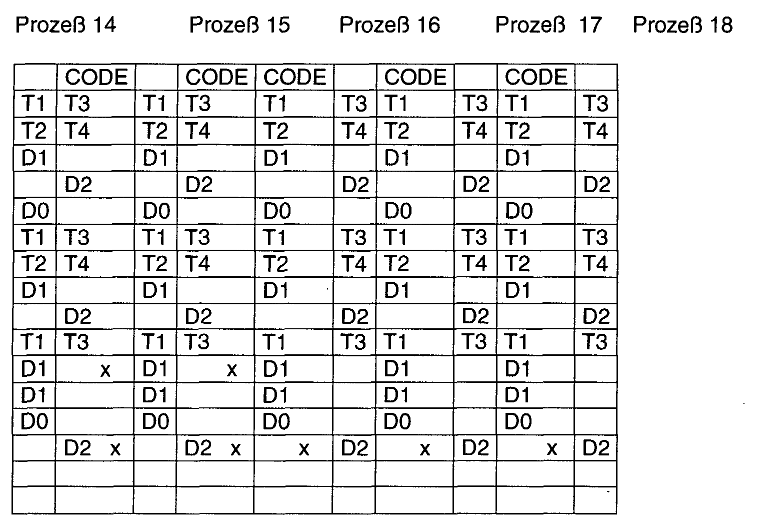

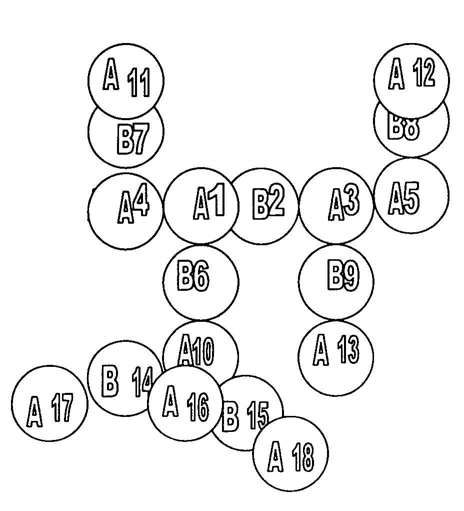

Zu beachten ist natürlich daß alle anderen Prozesse in der gleichen Abfolge weiter arbeiten, Die Ausprägungen sind jedoch nur von der Abfolge der Operationen D0,D1,D2 abhängig. Es können hier auch sogenannte Überholvorgänge stattfinden, d.h. daß entweder auf der linken oder auf der rechten Seite der Codierungssequenz die andere Seite der Codierungssequenz nicht zum Tragen kommt.

### Anhang A: Prozedurales Verfahren und determinierter Endzustand.

Im folgenden Beispiel wird aufgezeigt wie anhand einer vorgegebenen DNA-Befehlsfolge das Verfahren bezüglich eines Wachstumsprozess zu einem **determinierten Endzustand** führt. Das vorgegebene Verfahren benutzt dabei allein Operationen die im genetischen Prozess bekannt sind.

### Definition:

Nehmen wir an, man hat DNA-Sequenzen vorliegen deren Funktion durch folgende Weise definiert ist:
D0 definiert eine Verdoppelung der DNA die Codierung läuft auf dem gleichen Strang weiter.
D1,D2 definiert eine Verdoppelung der DNA die Codierung läuft auf dem gegenüberliegenden, also der correspondierenden DNA weiter, wobei D1 linksdrehend und D2 rechtsdrehend ist.
ST definiert einen Stop der DNA Interpretation.
ROT,LNG,RND,WHT,LIL definiert die Codierung der Proteine Pi (i=1,2..4)
ferner seien
d0 die inverse Codierung von D0
d1 die inverse Codierung von D1
st die inverse von St und ebenso
rot,lng,rnd,wht,lil die inverse Codierung von Pi
dann ist durch einen bliebigen DNA Doppelstrang bestehend aus (D0,D1,d0,d1,ST,st,ROT,rot,...) ein genetischer Prozess definiert.Die inversen Codierungen besitzen keine Funktion.

### Beispiel: (B1)

Es sind 2 Chromsomenpaare vorgegeben die folgende Codierungen besitzen, wobei die 5'-3' Codierung die obere Reihe darstellen soll, die entsprechende untere Reihe die 3'-5' Richtung.
Zur besseren Darstellung sollen ferner die einzelnen Schritte numeriert sein. Ferner wird angenommen, dass die Ausführung einer Operation nur einmal erfolgen kann.
Dadurch erhält die Codesequenz folgende Numerierung.

| | | | | | | | | | | | | | | |
|---|---|---|---|---|---|---|---|---|---|---|---|---|---|---|
| **1** | **2** | **3** | **4** | **5** | **6** | **7** | **8** | **9** | **10** | **11** | **12** | **13** | **14** | **15** |

### 1.Chromosom

| | | | | | | | | | | | | | | |
|---|---|---|---|---|---|---|---|---|---|---|---|---|---|---|
| **ROT** | **D1** | **d2** | **D1** | **d2** | **LNG** | **ST** | **RND** | **D1** | **d2** | **d0** | **D1** | **wht** | **st** | **LIL** |
| **rot** | **d1** | **D2** | **d1** | **D2** | **Ing** | **st** | **rnd** | **d1** | **D2** | **D0** | **d1** | **WHT** | **ST** | **lil** |

### 2.Chromosom

| | | | | | | | | | | | | | | |
|---|---|---|---|---|---|---|---|---|---|---|---|---|---|---|
| **ROT** | **D1** | **d2** | **D1** | **d2** | **LNG** | **ST** | **RND** | **D1** | **d2** | **d0** | **D1** | **WHT** | **st** | **LIL** |
| **rot** | **d1** | **D2** | **d1** | **D2** | **Ing** | **st** | **rnd** | **d1** | **D2** | **D0** | **d1** | **wht** | **ST** | **lil** |

die Länge der DNA-Sequenzen spielt hier keine Rolle , da durch die eindeutige Zuordnung der

A-T und C-G Basen die inverse Codierung von T1,T2,.. ST,D0,D1,D2 gleich lang ist.
Die Darstellung ist also nicht massstabsgetreu.
Die Chromosomen unterscheiden sich der Einfachheit nur im Merkmal WHT das einmal in der 3'-5 Richtung codiert ist und im 2.Chromosom in der 5'-3' Richtung.
Die Interpretationsrichtung soll von links nach rechts und der Anfang soll oben beginnen.

### Interpretation der Operatoren D0 und D1 und D2:

Man stelle sich den Zellkern mit dem doppelten Chromsomenstrang von oben gesehen vor

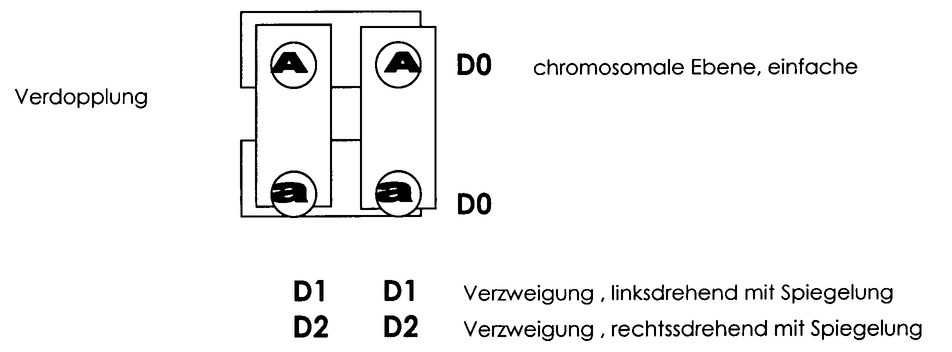

Dann ist D0 nur die Verdoppelung der Zelle auf dem gleichen Chromosomenstrang und D1,D2 die Verdoppelung mit dem Wechsel (Spiegelung) der Codierung in der vertikalen Ebene.

**a** bezeichnet in diesem Fall die 3'-5' Richtung und **A** die 5'-3' Richtung. Die vertikale Anordnung ist in der Darstellung der DNA Doppelstrang eines Chromosoms, die horizontale Anordnung soll die Beziehung bei der Replikation darstellen.

### Operationen:

### Beginn:

beginnt man mit ROT so wird also das Protein P1 exprimiert, die nachfolgende Funktion ist dann D1 die laut Definition die DNA Sequenz verdoppelt und die Codierung wechselt. Der aktuelle Befehlszustand ist unterstrichen.

Nach Definition ist durch D1 eine Verdopplung der DNA mit Wechsel der Codierung definiert. Im vorigen Beispiel ist nach Ausführung von Schritt 2 folgende Situation vorhanden.

### Schrittfolge:

| | | | | | | | | | | | | | | |
|---|---|---|---|---|---|---|---|---|---|---|---|---|---|---|
| **1** | **2** | **3** | **4** | **5** | **6** | **7** | **8** | **9** | **10** | **11** | **12** | **13** | **14** | **15** |

### Prozess 1.

### 1.Chromosom

| | | | | | | | | | | | | | | |
|---|---|---|---|---|---|---|---|---|---|---|---|---|---|---|
| **ROT** | **D1** | **d2** | **D1** | **d2** | **LNG** | ST | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | D2 | Ing | st | rnd | d1 | D2 | D0 | d1 | wht | ST | lil |

### Prozess 2. (Nachfolger von Prozess 1 erzeugt durch D1 von Prozess 1 in Schritt 2)

### 1.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | **D2** | **d1** | **D2** | **Ing** | **st** | **rnd** | **d1** | **D2** | **D0** | **d1** | **wht** | **ST** | lil |

da nach Definition von D1 die Codiersequenz im erzeugten Prozess wechselt, wird also die Ausführung der weiteren Schritte in Prozess 2 durch die untere Sequenz definiert. D.h. D2 in der unteren Reihe von Schritt 3 ist die nächste Operation von Prozess 2.

Durch Ausführung der weiteren Operationen erhält man :
in Prozess D2 Operation in Schritt 3 (Verdopplung mit Wechsel der Codierung in Schritt 3)

### Prozess 3 hat durch Ausführung von D2 in Schritt 3 in Prozess 2 folgenden Zustand:

### 1.Chromosom

| | | | | | | | | | | | | | | |
|---|---|---|---|---|---|---|---|---|---|---|---|---|---|---|
| ROT | D1 | d2 | **D1** | **d2** | **LNG** | **ST** | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | D2 | Ing | st | rnd | d1 | D2 | D0 | d1 | wht | ST | lil |

In der weiteren Operationsfolge der Prozesse 1,2,3 erhält man:
Prozess 4,5 und 6.

Aus Prozess 1 folgt:

### Prozess 4. Nachfolger von Prozess 1 durch Ausführung von D1 in Schritt 4.:

### 1.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | **D2** | **Ing** | st | **rnd** | **d1** | **D2** | **D0** | **d1** | **wht** | **ST** | lil |

Prozess 1 hat damit den Endzustand erreicht, da in der weiteren Folge die Codierung für LNG mit dem anschliessenden Stop erfolgt.

Ausgehend vom momentanen Zustand von Prozess 2 folgt:

### Prozess 5 ,Nachfolger von Prozess 2 durch Ausführung von D2 in Schritt 5.

### 1.Chromosom

| | | | | | | | | | | | | | | |
|---|---|---|---|---|---|---|---|---|---|---|---|---|---|---|
| ROT | D1 | d2 | D1 | d2 | **LNG** | **ST** | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | D2 | Ing | st | rnd | d1 | D2 | D0 | d1 | wht | ST | lil |

Prozess 5 hat dadurch ebenfalls wegen des anschliessenden Stops den Endzustand erreicht.

Aus Prozess 3 folgt:

### Prozess 6 ,Nachfolger von Prozess 3 durch Ausführung von D1 in Schritt 4.

### 1.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | wht | st | LIL |
| rot | d1 | D2 | d1 | D2 | Ing | st | rnd | d1 | D2 | d0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | **D2** | **Ing** | **st** | **rnd** | **d1** | **D2** | **D0** | **d1** | **wht** | **ST** | lil |

ebenfalls hat Prozess 3 den Endzustand erreicht.

Die Prozesse 2,4 und 6 erzeugen in der weiteren Operationsfolge Prozess 7,8 und 9,

### Prozess 7, Nachfolger von Prozess 2 durch Ausführung von D2 in Schritt 10

### 1.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | **d0** | **D1** | **wht** | **st** | **LIL** |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | D2 | Ing | st | rnd | d1 | D2 | D0 | d1 | wht | ST | lil |

### Prozess 8, Nachfolger von Prozess 4 durch Ausführung von D2 in Schritt 5.:

### 1.Chromosom

| | | | | | | | | | | | | | | |
|---|---|---|---|---|---|---|---|---|---|---|---|---|---|---|
| ROT | D1 | d2 | D1 | d2 | **LNG** | **ST** | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | D2 | Ing | st | rnd | d1 | D2 | D0 | d1 | wht | ST | lil |

Prozess 8 hat den Endzustand erreicht.

### Prozess 9 ,Nachfolger von Prozess 6 durch Ausführung von D2 in Schritt 5.

### 1.Chromosom

| | | | | | | | | | | | | | | |
|---|---|---|---|---|---|---|---|---|---|---|---|---|---|---|
| ROT | D1 | d2 | D1 | d2 | **LNG** | **ST** | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | D2 | Ing | st | rnd | d1 | D2 | D0 | d1 | wht | ST | lil |

Der Prozess 9 hat damit ebenfalls den Endzustand erreicht.

Zur weiteren Ausführung kommen nur die Prozesse 2,4 und 6
Aus Prozess 2 erfolgt durch D0 in Schritt 11

### Prozess 10:

### 1.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | **d1** | **wht** | **ST** | lil |

Prozess 2 hat damit den Endzustand erreicht.

Aus Prozess 4 erfolgt durch D2 in Position 10

### Prozess 11:

### 1.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | **d0** | **D1** | **wht** | **st** | **LIL** |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | D2 | Ing | st | rnd | d1 | D2 | D0 | d1 | wht | ST | lil |

Aus Prozess 6 erfolgt durch D2 in Position 10

### Prozess 12:

### 1.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | **d0** | **D1** | **wht** | **st** | **LIL** |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | D2 | Ing | st | rnd | d1 | D2 | D0 | d1 | wht | ST | lil |

Aus Prozess 6 erfolgt durch D0 in Position 11:

### Prozess 13:

### 1.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | **d1** | **wht** | **ST** | lil |

damit ist Prozess 6 und 13 beendet.

Aus Prozess 4 erfolgt durch D0 in Position 11

### Prozess 14: Nachfolger von Prozess 4 durch Ausführung von D0 in Schritt 11.:

### 1 .Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | **d1** | **wht** | **ST** | lil |

damit hat auch Prozess 4 und Prozess 14 den Endzustand erreicht.
In der Folge verdoppeln sich nur noch die Prozesse 7 , 11 und 12

### Prozess 15, Nachfolger von Prozess 7 durch Ausführung von D1 in Schritt 12.

### 1.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | d1 | **wht** | **ST** | lil |

### Prozess 16 Nachfolger von Prozess 11 durch Ausführung von D1 in Schritt 12:

### 1 .Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | wht | st | LIL |
| rot | d1 | D2 | d1 | D2 | Inq | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | d1 | **wht** | **ST** | lil |

### Prozess 17 Nachfolaer von Prozess 12 durch Ausführuna von D1 in Schritt 12:

### 1.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | wht | st | LIL |
| rot | d1 | D2 | d1 | D2 | Ing | st | rnd | d1 | D2 | D0 | d1 | WHT | ST | lil |

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | d1 | **wht** | **ST** | lil |

### Zusammenfassung:

Nach Abarbeitung aller möglichen Prozessfolgen ist in den Prozessen folgender Ablauf ausgeführt worden.Die nicht ausgeführten Schritte werden nicht angezeigt.

### Prozess 1.

| | | | | | | | | | | | | | | |
|---|---|---|---|---|---|---|---|---|---|---|---|---|---|---|
| **ROT** | **D1** | **d2** | **D1** | **d2** | **LNG** | ST | RND | D1 | d2 | d0 | D1 | wht | st | LIL |
| rot | d1 | D2 | d1 | D2 | Ing | st | rnd | d1 | D2 | D0 | d1 | WHT | ST | lil |

### Prozess 2. (Nachfolger von Prozess 1 erzeugt durch D1 von Prozess 1 in Schritt 2)

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | **D2** | **d1** | **D2** | **Ing** | **st** | **rnd** | **d1** | **D2** | **D0** | **d1** | **wht** | **ST** | lil |

### Prozess 3 hat durch Ausführung von D2 in Schritt 3 in Prozess 2 folgenden Zustand:

| | | | | | | | | | | | | | | |
|---|---|---|---|---|---|---|---|---|---|---|---|---|---|---|
| ROT | D1 | d2 | **D1** | **d2** | **LNG** | **ST** | RND | D1 | d2 | d0 | D1 | wht | st | LIL |
| rot | d1 | D2 | d1 | D2 | Ing | st | rnd | d1 | D2 | D0 | d1 | WHT | ST | lil |

### Prozess 4, Nachfolger von Prozessl durch Ausführung von D1 in Schritt 4.:

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | **D2** | **Ing** | **st** | **rnd** | **d1** | **D2** | **D0** | **d1** | **wht** | **ST** | lil |

### Prozess 5 ,Nachfolger von Prozess 2 durch Ausführung von D2 in Schritt 5.

| | | | | | | | | | | | | | | |
|---|---|---|---|---|---|---|---|---|---|---|---|---|---|---|
| ROT | D1 | d2 | D1 | d2 | **LNG** | **ST** | RND | D1 | d2 | d0 | D1 | wht | st | LIL |
| rot | d1 | D2 | d1 | D2 | Ing | st | rnd | d1 | D2 | D0 | d1 | WHT | ST | lil |

### Prozess 6 ,Nachfolger von Prozess 3 durch Ausführung von D1 in Schritt 4.

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | WHT | st | LIL |
| rot | d1 | D2 | d1 | **D2** | **Ing** | **st** | **rnd** | **d1** | **D2** | **D0** | **d1** | **wht** | **ST** | lil |

### Prozess 7, Nachfolger von Prozess 2 durch Ausführung von D2 in Schritt 10

| | | | | | | | | | | | | | | |
|---|---|---|---|---|---|---|---|---|---|---|---|---|---|---|
| ROT | D1 | d2 | D1 | d2 | LNG | ST | RND | D1 | d2 | **d0** | **D1** | **wht** | **st** | **LIL** |
| rot | d1 | D2 | d1 | D2 | Ing | st | rnd | d1 | D2 | D0 | d1 | WHT | ST | lil |

### Prozess 8, Nachfolger von Prozess 4 durch Ausführung von D2 in Schritt 5.:

| | | | | | | | | | | | | | | |
|---|---|---|---|---|---|---|---|---|---|---|---|---|---|---|
| ROT | D1 | d2 | D1 | d2 | **LNG** | **ST** | RND | D1 | d2 | d0 | D1 | wht | st | LIL |
| rot | d1 | D2 | d1 | D2 | Ing | st | rnd | d1 | D2 | D0 | d1 | WHT | ST | lil |

### Prozess 9 ,Nachfolger von Prozess 6 durch Ausführung von D2 in Schritt 5.

| | | | | | | | | | | | | | | |
|---|---|---|---|---|---|---|---|---|---|---|---|---|---|---|
| ROT | D1 | d2 | D1 | d2 | **LNG** | **ST** | RND | D1 | d2 | d0 | D1 | wht | st | LIL |
| rot | d1 | D2 | d1 | D2 | Ing | st | rnd | d1 | D2 | D0 | d1 | WHT | ST | lil |

### Prozess 10:

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | **d1** | **wht** | **ST** | lil |

### Prozess 11:

| | | | | | | | | | | | | | | |
|---|---|---|---|---|---|---|---|---|---|---|---|---|---|---|
| ROT | D1 | d2 | D1 | d2 | LNG | ST | RND | D1 | d2 | **d0** | **D1** | **wht** | **st** | **LIL** |
| rot | d1 | D2 | d1 | D2 | Ing | st | rnd | d1 | D2 | D0 | d1 | WHT | ST | lil |

### Prozess 12:

| | | | | | | | | | | | | | | |
|---|---|---|---|---|---|---|---|---|---|---|---|---|---|---|
| ROT | D1 | d2 | D1 | d2 | LNG | ST | RND | D1 | d2 | **d0** | **D1** | **wht** | **st** | **LIL** |
| rot | d1 | D2 | d1 | D2 | Ing | st | rnd | d1 | D2 | D0 | d1 | WHT | ST | lil |

### Prozess 13:

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | **d1** | **wht** | **ST** | lil |

### Prozess 14:

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | **d1** | **wht** | **ST** | lil |

### Prozess 15, Nachfolger von Prozess 7 durch Ausführung von D1 in Schritt 12.

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | d1 | **wht** | **ST** | lil |

### Prozess 16 Nachfolger von Prozess 11 durch Ausführung von D1 in Schritt 12:

### 2.Chromosom

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | d1 | **wht** | **ST** | lil |

### Prozess 17 Nachfolger von Prozess 12 durch Ausführung von D1 in Schritt 12:

| | | | | | | | | | | | | | | |
|---|---|---|---|---|---|---|---|---|---|---|---|---|---|---|
| ROT | D1 | d2 | D1 | d2 | LNG | ST | RND | D1 | d2 | d0 | D1 | **WHT** | st | LIL |
| rot | d1 | D2 | d1 | D2 | Ing | st | rnd | d1 | D2 | D0 | d1 | **wht** | **ST** | lil |

Da die Operationen D0,D1, ST nur auf den Wachstumsprozess wirken, und die Operationen d0,d1,st
sowie die inversen Codierungen keine Funktion besitzen kann man diesem Zellhaufen auch die eigentlichen Stoffwechselfunktionen zuordnen. Setzt man anstelle von ROT,RND... etc. die genetisch bestimmte Stoffwechselfunktion einer Zelle so hat man für jede einzelne Zelle deren Funktion vorliegen.
Im Beispiel haben die Zelle (Prozesse) bezogen auf ein Chromosomenpaar folgende Funktionen:

### Prozess 1.

| | | | | | | | | | | | | | | |
|---|---|---|---|---|---|---|---|---|---|---|---|---|---|---|
| ROT | | | | | **LNG** | | | | | | | | | |
| | | | | | | | | | | | | | | |

Bemerkung: ROT wurde nur beginnend mit Prozessl codiert ist im weiteren Verlauf aber ausgeschaltet worden.

### Prozess 2. (Nachfolger von Prozess 1 erzeugt durch D1 von Prozess 1 in Schritt 2)

| | | | | | | | | | | | | | | |
|---|---|---|---|---|---|---|---|---|---|---|---|---|---|---|
| | | | | | | | | | | | | **WHT** | | |
| | | | | | | | | | | | | **wht** | **ST** | |

### Prozess 3 hat durch Ausführung von D2 in Schritt 3 in Prozess 2 folgenden Zustand:

| | | | | | | | | | | | | | | |
|---|---|---|---|---|---|---|---|---|---|---|---|---|---|---|
| | | | | | **LNG** | **ST** | | | | | | | | |
| | | | | | | | | | | | | | | |

### Prozess 4, Nachfolger von Prozessl durch Ausführung von D1 in Schritt 4.:

| | | | | | | | | | | | | | | |
|---|---|---|---|---|---|---|---|---|---|---|---|---|---|---|
| | | | | | | | | | | | | **WHT** | | |
| | | | | | | | | | | | | **wht** | **ST** | |

### Prozess 5 ,Nachfolger von Prozess 2 durch Ausführung von D2 in Schritt 5.

| | | | | | | | | | | | | | | |
|---|---|---|---|---|---|---|---|---|---|---|---|---|---|---|
| | | | | | **LNG** | **ST** | | | | | | | | |
| | | | | | | | | | | | | | | |

### Prozess 6 ,Nachfolger von Prozess 3 durch Ausführung von D1 in Schritt 4.

| | | | | | | | | | | | | | | |
|---|---|---|---|---|---|---|---|---|---|---|---|---|---|---|
| | | | | | | | | | | | | **WHT** | | |
| | | | | | | | | | | | | **wht** | **ST** | |

### Prozess 7, Nachfolger von Prozess 2 durch Ausführung von D2 in Schritt 10

| | | | | | | | | | | | | | | |
|---|---|---|---|---|---|---|---|---|---|---|---|---|---|---|
| | | | | | | | | | | | | | | **LIL** |
| | | | | | | | | | | | | | | |

### Prozess 8, Nachfolger von Prozess 4 durch Ausführung von D2 in Schritt 5.:

| | | | | | | | | | | | | | | |
|---|---|---|---|---|---|---|---|---|---|---|---|---|---|---|
| | | | | | **LNG** | **ST** | | | | | | | | |
| | | | | | | | | | | | | | | |

### Prozess 9 ,Nachfolger von Prozess 6 durch Ausführung von D2 in Schritt 5.

| | | | | | | | | | | | | | | |
|---|---|---|---|---|---|---|---|---|---|---|---|---|---|---|
| | | | | | **LNG** | **ST** | | | | | | | | |
| | | | | | | | | | | | | | | |

### Prozess 10:

### 2.Chromosom

| | | | | | | | | | | | | | | |
|---|---|---|---|---|---|---|---|---|---|---|---|---|---|---|
| | | | | | | | | | | | | **WHT** | st | |
| | | | | | | | | | | | | **wht** | **ST** | |

### Prozess 11:

| | | | | | | | | | | | | | | |
|---|---|---|---|---|---|---|---|---|---|---|---|---|---|---|
| | | | | | | | | | | | | | | **LIL** |
| | | | | | | | | | | | | | | |

### Prozess 12:

| | | | | | | | | | | | | | | |
|---|---|---|---|---|---|---|---|---|---|---|---|---|---|---|
| | | | | | | | | | | | | | | **LIL** |
| | | | | | | | | | | | | | | |

### Prozess 13:

| | | | | | | | | | | | | | | |
|---|---|---|---|---|---|---|---|---|---|---|---|---|---|---|
| | | | | | | | | | | | | **WHT** | | |
| | | | | | | | | | | | | **wht** | **ST** | |

### Prozess 14:

| | | | | | | | | | | | | | | |
|---|---|---|---|---|---|---|---|---|---|---|---|---|---|---|
| | | | | | | | | | | | | **WHT** | | |
| | | | | | | | | | | | | **wht** | **ST** | |

### Prozess 15, Nachfolger von Prozess 7 durch Ausführung von D1 in Schritt 12.

| | | | | | | | | | | | | | | |
|---|---|---|---|---|---|---|---|---|---|---|---|---|---|---|
| | | | | | | | | | | | | **WHT** | | |
| | | | | | | | | | | | | **wht** | **ST** | |

### Prozess 16 Nachfolger von Prozess 11 durch Ausführung von D1 in Schritt 12:

### 2.Chromosom

| | | | | | | | | | | | | | | |
|---|---|---|---|---|---|---|---|---|---|---|---|---|---|---|
| | | | | | | | | | | | | **WHT** | | |
| | | | | | | | | | | | | **wht** | **ST** | |

### Prozess 17 Nachfolger von Prozess 12 durch Ausführung von D1 in Schritt 12:

| | | | | | | | | | | | | | | |
|---|---|---|---|---|---|---|---|---|---|---|---|---|---|---|
| | | | | | | | | | | | | **WHT** | | |
| | | | | | | | | | | | | **wht** | **ST** | |

### Folgerungen:

Wie man sieht ist jede Folge aus den obendefinierten Operationen endlich, da die Anzahl der Operationen endlich ist und keine Rücksprünge erlaubt sind. Ausserdem ist die Anzahl der erzeugten Prozesse endlich und die erzeugten Prozesse sind wegen der eindeutigen Verzweigung in ihrer Funktion determiniert. Durch die Determination der Zellfunktion aufgrund der DNA-Definition ist damit auch das Anschalten bzw. das Abschalten einer Genfunktion in der Zelle erklärt.

Eine weitere Frage ist die, verändert sich das Gesamt-Ergebnis wenn die Operationsfolge von unten links nach rechts beginnt. Die Antwort ist , dass dem Gesamt-Ergebnis die Prozesse fehlen die erzeugt werden , bis das erste Mal die Codierung bei einem Beginn in der oberen Reihe erzeugt werden würde, d.h dass im wesentlichen das Gesamtergebnis gleich ist.

Ferner stellt sich noch die Frage wie wird das Gesamtergebnis beeinflusst wenn man ein Teilstück zwischen den einzelnen Schritten einfügt.

Ferner liegt durch das vorgegebene einfache Beispiel nahe, dass die Anzahl der Steuerungsoperationen D0,D1,D2,St gegenüber der Anzahl der Operation ROT,RND etc die den Endzustand eines Prozesses steuern relativ gross ist. Wegen der Erkenntnis dass nur etwa 5 % der DNA des Menschen echte Gene darstellen liegt daher die Vermutung nahe ,dass der Rest wohl zum grossen Teil aus Steuerungs-operationen besteht.

### Räumliche Abbildung.

Man stelle sich nun vor, wir legen die Codiersequenzen in eine Kugel und kreieren nach jeder D1,D0 eine neue Kugel die ebenfalls die neugenerierte Codiersequenz enthält und sich in einem bestimmten Winkel zur vorhergehenden Kugel anordnet.
Durch Verdoppelung ordnen wir die Kugel wie in der Mitose so an, dass die durch einen gedachten Pol auf der Kugel definierte Äquatorialebene sich jeweils um 90° der beiden Polarkoordinaten dreht.

### Beginn:

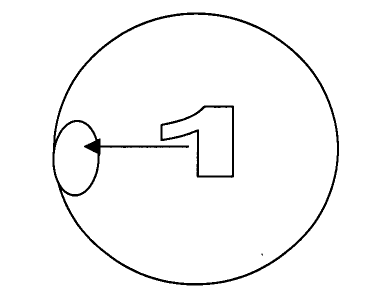

### Justierung

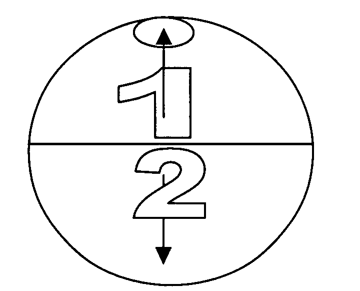

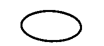

Nach Beendigung der Teilung erhalten wir die beiden Anordnungen .

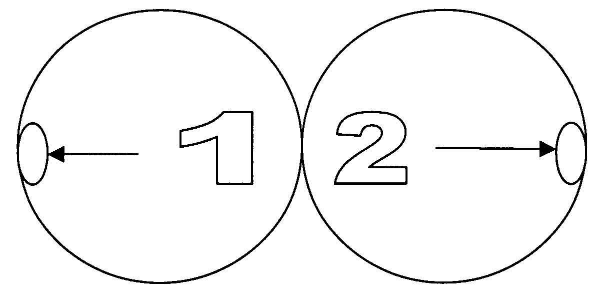

Nach den ersten beiden Duplikationen erhalten wir in etwa folgende Konstellation.

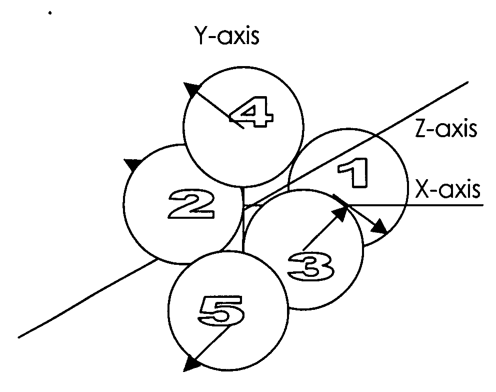

Wegen der Drehung von ca. 90° erhalten wir nach der 2. Duplikation eine Symmetrie.

### Anhang B : Spezielle Anordnungen von D0,D1 und D2 Operatoren und deren Wirkung im 3-dimensionalen Raum.

Im folgenden soll speziell die Wirkung von bestimmten Anordnungen der D0,D1,D2,ST Operationen gezeigt werden. Dazu nehmen wir folgenden Ausgangszustand in einer Zelle an, deren DNA-Sequenz den folgenden Abschnitt enthält. Der Feminine und maskuline Ursprung sollen in diesem Fall gleiche Codierungen enthalten. D.h der n-te Zustand einer Zelle enthält folgende Codiersequenz. (d0,d1,d2,st, f0, m0.. sind die inversen Codierungen)

| | | | | | | | | |
|---|---|---|---|---|---|---|---|---|
| 5'-3' | ... | D1 | d2 | D1 | d0 | D0 | ...... | (F0) |
| 3'-5' | ... | d1 | D2 | d1 | D0 | d0 | ..... | (f0) |

| | | | | | | | | |
|---|---|---|---|---|---|---|---|---|
| 5'-3' | ... | D1 | d2 | D1 | d0 | D0 | ..... | (M0) |
| 3'-5' | ... | d1 | D2 | d1 | D0 | d0 | ..... | (m0) |

Dann ist ausgehend von dem n-ten Zustand beginnend mit D1 links oben:

| | | | | | | | | |
|---|---|---|---|---|---|---|---|---|
| 5'-3' | ... | **D1** | **d2** | **D1** | **d0** | **D0** | ..... | **(F0)** |
| 3'-5' | ... | d1 | D2 | d1 | D0 | d0 | ...... | (f0) |

| | | | | | | | | |
|---|---|---|---|---|---|---|---|---|
| 5'-3' | ... | D1 | d2 | D1 | d0 | D0 | ..... | (M0) |
| 3'-5' | ... | d1 | D2 | d1 | D0 | d0 | ..... | (m0) |

### Nachfolgende n+1. Zelle:

| | | | | | | | | |
|---|---|---|---|---|---|---|---|---|
| 5'-3' | ... | D1 | d2 | D1 | d0 | D0 | ..... | (F0) |
| 3'-5' | ... | d1 | D2 | d1 | D0 | d0 | ..... | (f0) |

| | | | | | | | | |
|---|---|---|---|---|---|---|---|---|
| 5'-3' | ... | D1 | d2 | D1 | d0 | D0 | ..... | **(M0)** |
| 3'-5' | ... | d1 | **D2** | **d1** | **D0** | **d0** | **......** | **(m0)** |

aus dieser entsteht durch Ausführung von D2 (fett), die n+2. Zelle

| | | | | | | | | |
|---|---|---|---|---|---|---|---|---|
| 5'-3' | ... | D1 | d2 | **D1** | **d0** | **D0** | ..... | **(F0)** |
| 3'-5' | ... | d1 | D2 | d1 | D0 | d0 | ..... | (f0) |

| | | | | | | | | |
|---|---|---|---|---|---|---|---|---|
| 5'-3' | ... | D1 | d2 | D1 | d0 | D0 | ..... | (M0) |
| 3'-5' | ... | d1 | D2 | d1 | D0 | d0 | ..... | (m0) |

### Aus der n-ten und der n+2 ten Zelle entstehen 2 weitere Zellen n+3 Zelle :

| | | | | | | | | |
|---|---|---|---|---|---|---|---|---|
| 5'-3' | ... | D1 | d2 | D1 | d0 | D0 | ..... | (F0) |
| 3'-5' | ... | d1 | D2 | d1 | D0 | d0 | ..... | (f0) |

| | | | | | | | | |
|---|---|---|---|---|---|---|---|---|
| 5'-3' | ... | D1 | d2 | D1 | d0 | D0 | ..... | **(M0)** |
| 3'-5' | ... | d1 | D2 | d1 | **D0** | **d0** | ..... | **(m0)** |

### n+4. Zelle

| | | | | | | | | |
|---|---|---|---|---|---|---|---|---|
| 5'-3' | ... | D1 | d2 | D1 | d0 | D0 | ..... | (F0) |
| 3'-5' | ... | d1 | D2 | d1 | D0 | d0 | ..... | (f0) |

| | | | | | | | | |
|---|---|---|---|---|---|---|---|---|
| 5'-3' | ... | D1 | d2 | D1 | d0 | D0 | ..... | **(M0)** |
| 3'-5' | ... | d1 | D2 | d1 | **D0** | **d0** | ...... | **(m0)** |

D.h 5 Zellen bestimmen einen neuen Wachstumsprozess der im weiteren zu 2/5 von den Operatoren des femininen Anteils und zu 3/5 aus den Operatoren des maskulinen Teils bestimmt ist. Daher auch die fünf Finger der meisten Wirbeltiere. Entfernt man den 2. D1 Operator in der oberen Zeile im unteren Beispiel durch ST ersetzt ), dann erhält man den einfacheren Fall einer Symmetrie für den **F0** Anteil , dieser Anteil bestimmt auch den Anfangszustand für die weitere Abfolge.

| | | | | | | | | |
|---|---|---|---|---|---|---|---|---|
| 5'-3' | ... ... | D1 | d2 | st | d0 | D0 | ..... | (F0) |
| 3'-5' | | d1 | D2 | ST | D0 | d0 | ..... | (f0) |

| | | | | | | | | |
|---|---|---|---|---|---|---|---|---|
| 5'-3' | ... | D1 | d2 | st | d0 | D0 | ..... | (M0) |
| 3'-5' | ... | d1 | D2 | ST | D0 | d0 | ..... | (m0) |

Ergibt folgende Zustände:

### n-te Zelle:

| | | | | | | | | |
|---|---|---|---|---|---|---|---|---|
| 5'-3' | ... | **D1** | **d2** | **st** | **d0** | **D0** | ...... | **(F0)** |
| 3'-5' | ... | d1 | D2 | ST | D0 | d0 | ...... | (f0) |

| | | | | | | | | |
|---|---|---|---|---|---|---|---|---|
| 5'-3' | ... | D1 | d2 | st | d0 | D0 | ..... | (M0) |
| 3'-5' | ... | d1 | D2 | ST | D0 | d0 | ...... | (m0) |

### n+1. Zelle:

| | | | | | | | | |
|---|---|---|---|---|---|---|---|---|
| 5'-3' | ... | D1 | d2 | st | d0 | D0 | ..... | (F0) |
| 3'-5' | ... | d1 | D2 | ST | D0 | d0 | ..... | (f0) |

| | | | | | | | | |
|---|---|---|---|---|---|---|---|---|
| 5'-3' | ... | D1 | d2 | st | d0 | D0 | ..... | **(M0)** |
| 3'-5' | ... | d1 | **D2** | **ST** | D0 | d0 | ..... | **(m0)** |

### n+2.Zelle:

| | | | | | | | | |
|---|---|---|---|---|---|---|---|---|
| 5'-3' | ... | D1 | d2 | **st** | **d0** | **D0** | ..... | **(F0)** |
| 3'-5' | ... | d1 | D2 | ST | D0 | d0 | ..... | (f0) |

| | | | | | | | | |
|---|---|---|---|---|---|---|---|---|
| 5'-3' | ... | D1 | d2 | st | d0 | D0 | ..... | (M0) |
| 3'-5 | ... | d1 | D2 | ST | D0 | d0 | ..... | (m0) |

### Anhang C : Vererbung, Übereinstimmung mit den Mendel'schen Gesetzen.

Im folgenden soll nun die Vererbung anhand der Kombination zweier Chromosomenstränge aufgezeigt werden.
Dazu nehmen wir folgenden Ausgangszustand in den Zellen der Mutter bzw Vaterzelle an: mit (F0) soll die 0-te Generation des femininen bzw. mit M0 des maskulinen Teils bezeichnet werden
und A,T,C,G die Basen der DNA sowie D1 der Duplikationsoperator mit wechselnder Codierung.
Dann hat man bei der Vereinigung einer femininen mit einer maskulinen Zelle folgende Konstellation:

| | | | | | | | | |
|---|---|---|---|---|---|---|---|---|
| 5'-3' | ttt | TTT | D1 | **LIL** | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | **ROT** | CCC | | | (M0) |
| 3'-5' | TTT | ttt | d1 | rot | ccc | | | (M0) |

Nehmen wir an, dass ein Merkmal **LIL** (,lil' ist die inverse Codierung) nur im femininen Teil enthalten ist und **ROT** (rot' die inverse) nur im maskulinen Teil an der Stelle enthalten ist wo normalerweise LIL stehen sollte dann codieren die weiteren Zellen folgende Funktionen.

### 1.Zelle

| | | | | | | | | |
|---|---|---|---|---|---|---|---|---|
| 5'-3' | **ttt** | **TTT** | **D1** | **LIL** | **CCC** | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

### Nachfolgende 2. Zelle:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | **ROT** | **CCC** | | | (M0) |
| 3'-5' | TTT | ttt | d1 | rot | ccc | | | (M0) |

D.h die Hälfte der Zellen besitzt die Funktion entsprechend der Codesequenz:

| | | | | | | | |
|---|---|---|---|---|---|---|---|
| **ttt** | **TTT** | **D1** | **LIL** | **CCC** | | | **(F0)** |

die andere Hälfte die Funktion entsprechend der Sequenz:

| | | | | | | | |
|---|---|---|---|---|---|---|---|
| | | | **ROT** | **CCC** | | | **(M0)** |

d.h allerdings auch nichts anderes als dass das Merkmal LIL,ROT gemischt in den Nachkommen vorhanden ist.

In der Meiose, der Bildung von 4 meiotischen Zellen zu vermehrungsfähigen Keimzellen sieht dann das folgendermassen aus:
Ausgehend von

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

ergibt nach der 1. Verdoppelung:

### F:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

### M:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

Ergebnis sind 4 haploide Zellen die untereinander in den Nachkommen wieder bei gleicher Wahrscheinlichkeit folgende **16 möglichen** Kombinationen bilden.

### F1:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

### F2:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

### M1:

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

### M2:

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

### F1 mit F1:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

### F1 mit F2:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

### F1 mit M1:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

### F1 mit M2:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

### F2 mit F1:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

### F2 mit F2:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

### F2 mit M1:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

### F2 mit M2:

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

### M1 mit F1:

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

### M1 mit F2:

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

### M1 mit M1

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

### M1 mit M2:

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

### M2 mit F1 :

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

### M2 mit F2:

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

| | | | | | | | | |
|---|---|---|---|---|---|---|---|---|
| 5'-3' | ttt | TTT | D1 | LIL | CCC | | | (F0) |
| 3'-5' | TTT | ttt | d1 | lil | ccc | | | (F0) |

### M2 mit M1:

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

### M2 mit M2:

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

| | | | | | | | | |
|---|---|---|---|---|---|---|---|---|
| 5'-3' | ttt | TTT | D1 | ROT | CCC | | | (M0) |
| 3'-5' | TTT | ttt | d1 | rot | ccc | | | (M0) |

Die Zellen in den 16 verschiedenen Nachkommen besitzen demnach die Funktionen der entsprechenden Codierung für:

### F1 mit F1:

| | | | | | | | | |
|---|---|---|---|---|---|---|---|---|
| 5'-3' | ttt | TTT | **D1** | **LIL** | **CCC** | | | (F0) |
| 5'-3' | ttt | TTT | D1 | **LIL** | **CCC** | | | (F0) |

### F1 mit F2:

| | | | | | | | | |
|---|---|---|---|---|---|---|---|---|
| 5'-3' | ttt | TTT | **D1** | **LIL** | **CCC** | | | (F0) |
| 5'-3' | ttt | TTT | D1 | **LIL** | **CCC** | | | (F0) |

### F1 mit M1:

| | | | | | | | | |
|---|---|---|---|---|---|---|---|---|
| 5'-3' | ttt | TTT | **D1** | **LIL** | **CCC** | | | (F0) |
| 5'-3' | ttt | TTT | D1 | **ROT** | **CCC** | | | (M0) |

### F1 mit M2:

| | | | | | | | | |
|---|---|---|---|---|---|---|---|---|
| 5'-3' | ttt | TTT | **D1** | **LIL** | **CCC** | | | (F0) |
| 5'-3' | ttt | TTT | D1 | **ROT** | **CCC** | | | (M0) |

### F2 mit F1:

| | | | | | | | | |
|---|---|---|---|---|---|---|---|---|
| 5'-3' | ttt | TTT | **D1** | **LIL** | **CCC** | | | (F0) |
| 5'-3' | ttt | TTT | D1 | **LIL** | **CCC** | | | (F0) |

### F2 mit F2:

| | | | | | | | | |
|---|---|---|---|---|---|---|---|---|
| 5'-3' | ttt | TTT | **D1** | **LIL** | **CCC** | | | (F0) |
| 5'-3' | ttt | TTT | D1 | **LIL** | **CCC** | | | (F0) |

### F2 mit M1:

| | | | | | | | | |
|---|---|---|---|---|---|---|---|---|
| 5'-3' | ttt | TTT | **D1** | **LIL** | **CCC** | | | (F0) |
| 5'-3' | ttt | TTT | D1 | **ROT** | **CCC** | | | (M0) |

### F2 mit M2:

| | | | | | | | | |
|---|---|---|---|---|---|---|---|---|
| 5'-3' | ttt | TTT | **D1** | **LIL** | **CCC** | | | (F0) |
| 5'-3' | ttt | TTT | D1 | **ROT** | **CCC** | | | (M0) |

### M1 mit F1:

| | | | | | | | | |
|---|---|---|---|---|---|---|---|---|
| 5'-3' | ttt | TTT | **D1** | **ROT** | **CCC** | | | (M0) |
| 5'-3' | ttt | TTT | D1 | **LIL** | **CCC** | | | (F0) |

### M1 mit F2:

| | | | | | | | | |
|---|---|---|---|---|---|---|---|---|
| 5'-3' | ttt | TTT | **D1** | **ROT** | **CCC** | | | (M0) |
| 5'-3' | ttt | TTT | D1 | **LIL** | **CCC** | | | (F0) |

### M1 mit M1

| | | | | | | | | |
|---|---|---|---|---|---|---|---|---|
| 5'-3' | ttt | TTT | **D1** | **ROT** | **CCC** | | | (M0) |
| 5'-3' | ttt | TTT | D1 | **ROT** | **CCC** | | | (M0) |

### M1 mit M2:

| | | | | | | | | |
|---|---|---|---|---|---|---|---|---|
| 5'-3' | ttt | TTT | **D1** | **ROT** | **CCC** | | | (M0) |
| 5'-3' | ttt | TTT | D1 | **ROT** | **CCC** | | | (M0) |

### M2 mit F1:

| | | | | | | | | |
|---|---|---|---|---|---|---|---|---|
| 5'-3' | ttt | TTT | **D1** | **ROT** | **CCC** | | | (M0) |
| 5'-3' | ttt | TTT | D1 | **LIL** | **CCC** | | | (F0) |

### M2 mit F2:

| | | | | | | | | |
|---|---|---|---|---|---|---|---|---|
| 5'-3' | ttt | TTT | **D1** | **ROT** | **CCC** | | | (M0) |
| 5'-3' | ttt | TTT | D1 | **LIL** | **CCC** | | | (F0) |

### M2 mit M1:

| | | | | | | | | |
|---|---|---|---|---|---|---|---|---|
| 5'-3' | ttt | TTT | **D1** | **ROT** | **CCC** | | | (M0) |
| 5'-3' | ttt | TTT | D1 | **ROT** | **CCC** | | | (M0) |

### M2 mit M2:

| | | | | | | | | |
|---|---|---|---|---|---|---|---|---|
| 5'-3' | ttt | TTT | **D1** | **ROT** | **CCC** | | | (M0) |
| 5'-3' | ttt | TTT | D1 | **ROT** | **CCC** | | | (M0) |

D.h 8 Nachkommen besitzen die gemischten Funktionen **LIL und ROT,** Vier Nachkommen in reiner Form die Funktion **LIL** und vier Nachkommen die reine Form **ROT,** unter der Annahme bei gleichen Wahrscheinlichkeiten. Das Verhältnis ist also 1:2:1

### Dominant - rezessiv

Im nächsten Fall betrachten wir die Ausprägung mit zwei Merkmalen LIL und ROT und verändern die Operatoren,

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

Die Ausprägungen sind also:

### 1.Zelle

| | | | | | | | | |
|---|---|---|---|---|---|---|---|---|
| 5'-3' | **ttt** | **d0** | **D0** | **LIL** | **CCC** | | | (F0) |
| 3'-5 | TTT | D0 | d0 | lil | ccc | | | (F0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

### 2.Zelle

| | | | | | | | | |
|---|---|---|---|---|---|---|---|---|
| 5'-3' | **ttt** | **d0** | **D0** | **LIL** | **CCC** | | | (F0) |
| 3'-5 | TTT | D0 | d0 | lil | ccc | | | (F0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

alle Zellen haben also das Merkmal **LIL** (D0 verdoppelt nur), das Merkmal **ROT** kommt nicht zur Ausprägung ist also rezessiv.

In der Meiose sind dann folgende Rekombinationen möglich:

Aus

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

folgt durch Verdoppelung:

### F1:

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

### F2:

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

### M1:

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

### M2:

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

Ergebnis sind 4 haploide Zellen die untereinander wieder bei gleicher Wahrscheinlichkeitsverteilung folgende 16 mögliche Kombinationen bilden.

### Rekombination:

### F1 mit F1 :

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

### F1 mit F2:

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

### F1 mit M1:

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

### F1 mit M2:

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

### F2 mit F1:

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

### F2 mit F2:

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

### F2 mit M1:

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

### F2 mit M2:

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

### M1 mit F1:

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

### M1 mit F2:

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

### M1 mit M1:

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

### M 1 mit M2:

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

### M2 mit F1:

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

### M2 mit F2:

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | ttt | d0 | D0 | LIL | CCC | | | (F0) |
| 3'-5 | TTT | D0 | d0 | lil | ccc | | | (F0) |

### M2 mit M1:

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

### M2 mit M2:

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | D1 | ST | d0 | ROT | CCC | | | (M0) |
| 3'-5' | d1 | st | D0 | rot | ccc | | | (M0) |

4 Nachkommen tragen das Merkmal LIL in reiner Form, 8 die Merkmale **LIL und ROT** gemischt und
4 Nachkommen tragen das Merkmal **ROT** in reiner Form,

Aus diesen 16 Kombinationen entstehen folgende Codierungen nach Ausführung der Operationen **D1** und **D0** in der Nachkommenschaft:

### F1 mit F1:

| | | | | | | | | |
|---|---|---|---|---|---|---|---|---|
| 5'-3' | ttt | d0 | **D0** | **LIL** | **CCC** | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | D0 | **LIL** | **CCC** | | | (F0) |
| 3'-5 | TTT | D0 | d0 | lil | ccc | | | (F0) |

### F1 mit F2:

| | | | | | | | | |
|---|---|---|---|---|---|---|---|---|
| 5'-3' | ttt | d0 | **D0** | **LIL** | **CCC** | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | D0 | **LIL** | **CCC** | | | (F0) |
| 3'-5 | TTT | D0 | d0 | lil | ccc | | | (F0) |

### F1 mit M1:

| | | | | | | | | |
|---|---|---|---|---|---|---|---|---|
| 5'-3' | ttt | d0 | **D0** | **LIL** | **CCC** | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | D0 | **LIL** | **CCC** | | | (F0) |
| 3'-5 | TTT | D0 | d0 | lil | ccc | | | (F0) |

### F1 mit M2:

| | | | | | | | | |
|---|---|---|---|---|---|---|---|---|
| 5'-3' | ttt | d0 | **D0** | **LIL** | **CCC** | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | **D0** | **LIL** | **CCC** | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | **D0** | **LIL** | **CCC** | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | D0 | **LIL** | **CCC** | | | (F0) |
| 3'-5' | TTT | D0 | d0 | lil | ccc | | | (F0) |

### F2 mit F2:

| | | | | | | | | |
|---|---|---|---|---|---|---|---|---|
| 5'-3' | ttt | d0 | **D0** | **LIL** | **CCC** | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | D0 | **LIL** | **CCC** | | | (F0) |
| 3'-5 | TTT | D0 | d0 | lil | ccc | | | (F0) |

### F2 mit M1:

| | | | | | | | | |
|---|---|---|---|---|---|---|---|---|
| 5'-3' | ttt | d0 | **D0** | **LIL** | **CCC** | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | D0 | **LIL** | **CCC** | | | (F0) |
| 3'-5 | TTT | D0 | d0 | lil | ccc | | | (F0) |

### F2 mit M2:

| | | | | | | | | |
|---|---|---|---|---|---|---|---|---|
| 5'-3' | ttt | d0 | **D0** | **LIL** | **CCC** | | | (F0) |
| 3'-5 | TTT | D0 | d0 | lil | ccc | | | (F0) |

| | | | | | | | | |
|---|---|---|---|---|---|---|---|---|
| 5'-3' | ttt | d0 | D0 | **LIL** | **CCC** | | | (F0) |
| 3'-5 | TTT | D0 | d0 | lil | ccc | | | (F0) |

### M1 mit F1:

| | | | | | | | | |
|---|---|---|---|---|---|---|---|---|
| 5'-3' | **D1** | **ST** | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | ttt | d0 | D0 | **LIL** | **CCC** | | | (F0) |
| 3'-5 | TTT | **D0** | **d0** | **lil** | **ccc** | | | (F0) |

| | | | | | | | | |
|---|---|---|---|---|---|---|---|---|
| 5'-3' | ttt | d0 | D0 | **LIL** | **CCC** | | | (F0) |
| 3'-5 | TTT | D0 | **d0** | **lil** | **ccc** | | | (F0) |

### M1 mit F2:

| | | | | | | | | |
|---|---|---|---|---|---|---|---|---|
| 5'-3' | **D1** | **ST** | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | ttt | d0 | D0 | **LIL** | **CCC** | | | (F0) |
| 3'-5 | TTT | **D0** | **d0** | **lil** | **ccc** | | | (F0) |

| | | | | | | | | |
|---|---|---|---|---|---|---|---|---|
| 5'-3' | ttt | d0 | D0 | **LIL** | **CCC** | | | (F0) |
| 3'-5 | TTT | D0 | **d0** | **lil** | **ccc** | | | (F0) |

### M1 mit M1:

| | | | | | | | | |
|---|---|---|---|---|---|---|---|---|
| 5'-3' | **D1** | **ST** | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | D1 | ST | d0 | **ROT** | **CCC** | | | (M0) |
| 3'-5' | d1 | **st** | **D0** | **rot** | **ccc** | | | (M0) |

| | | | | | | | | |
|---|---|---|---|---|---|---|---|---|
| 5'-3' | D1 | ST | d0 | **ROT** | **CCC** | | | (M0) |
| 3'-5' | d1 | **st** | D0 | **rot** | **ccc** | | | (M0) |

### M1 mit M2:

| | | | | | | | | |
|---|---|---|---|---|---|---|---|---|
| 5'-3' | **D1** | ST | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | D1 | ST | d0 | **ROT** | **CCC** | | | (M0) |
| 3'-5' | d1 | **st** | **D0** | **rot** | **ccc** | | | (M0) |

| | | | | | | | | |
|---|---|---|---|---|---|---|---|---|
| 5'-3' | D1 | ST | d0 | **ROT** | **CCC** | | | (M0) |
| 3'-5' | d1 | st | D0 | **rot** | **ccc** | | | (M0) |

### M2 mit F1:

| | | | | | | | | |
|---|---|---|---|---|---|---|---|---|
| 5'-3' | **D1** | ST | d0 | ROT | CCC | | | (M0) |
| 3'-5' | d1 | **st** | D0 | rot | ccc | | | (M0) |

| | | | | | | | | |
|---|---|---|---|---|---|---|---|---|
| 5'-3' | ttt | d0 | D0 | **LIL** | **CCC** | | | (F0) |
| 3'-5 | TTT | **D0** | **d0** | **lil** | **ccc** | | | (F0) |

| | | | | | | | | |
|---|---|---|---|---|---|---|---|---|
| 5'-3' | ttt | d0 | D0 | **LIL** | **CCC** | | | (F0) |
| 3'-5 | TTT | D0 | **d0** | **lil** | **ccc** | | | (F0) |

### M2 mit F2:

| | | | | | | | | |
|---|---|---|---|---|---|---|---|---|
| 5'-3' | **D1** | **ST** | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | ttt | d0 | D0 | **LIL** | **CCC** | | | (F0) |
| 3'-5 | TTT | **D0** | **d0** | **lil** | **ccc** | | | (F0) |

| | | | | | | | | |
|---|---|---|---|---|---|---|---|---|
| 5'-3' | ttt | d0 | D0 | **LIL** | **CCC** | | | (F0) |
| 3'-5 | TTT | D0 | **d0** | **lil** | **ccc** | | | (F0) |

### M2 mit M1:

| | | | | | | | | |
|---|---|---|---|---|---|---|---|---|
| 5'-3' | **D1** | **ST** | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | D1 | ST | d0 | **ROT** | **CCC** | | | (M0) |
| 3'-5' | d1 | **st** | **D0** | **rot** | **ccc** | | | (M0) |

| | | | | | | | | |
|---|---|---|---|---|---|---|---|---|
| 5'-3' | D1 | ST | d0 | **ROT** | **CCC** | | | (M0) |
| 3'-5' | d1 | st | D0 | **rot** | **ccc** | | | (M0) |

### M2 mit M2:

| | | | | | | | | |
|---|---|---|---|---|---|---|---|---|
| 5'-3' | **D1** | **ST** | d0 | ROT | CCC | | | (M0) |
| 3'-5' | d1 | st | D0 | rot | ccc | | | (M0) |

| | | | | | | | | |
|---|---|---|---|---|---|---|---|---|
| 5'-3' | D1 | ST | d0 | **ROT** | **CCC** | | | (M0) |
| 3'-5' | d1 | **st** | **D0** | **rot** | **ccc** | | | (M0) |

| | | | | | | | | |
|---|---|---|---|---|---|---|---|---|
| 5'-3' | D1 | ST | d0 | **ROT** | **CCC** | | | (M0) |
| 3'-5' | d1 | st | D0 | **rot** | **ccc** | | | (M0) |

Anmerkung: Nur die 5'-3' Richtung kann Proteine codieren. Die Codesequenz folgt allerdings der 3'-5' Richtung.

Listet man die für die Proteincodierung relevanten Merkmale in den 16 verschiedenen Nachkommen auf so erhält man:

### F1 mit F1:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### F1 mit F2:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### F1 mit M1:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### F1 mit M2:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### F2 mit F1:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### F2 mit F2:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### F2 mit M1:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### F2 mit M2:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### M1 mit F1:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### M1 mit F2:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### M1 mit M1:

| | | | | | | | | |
|---|---|---|---|---|---|---|---|---|
| 5'-3' | | | | **ROT** | **CCC** | | | (M0) |
| 5'-3' | | | | **ROT** | **CCC** | | | (M0) |

### M1 mit M2:

| | | | | | | | | |
|---|---|---|---|---|---|---|---|---|
| 5'-3' | | | | **ROT** | **CCC** | | | (M0) |
| 5'-3' | | | | **ROT** | **CCC** | | | (M0) |

### M2 mit F1:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### M2 mit F2:

| | | | | | | | | |
|---|---|---|---|---|---|---|---|---|
| 5'-3' | | | | **LIL** | **CCC** | | | (F0) |
| 5'-3' | | | | **LIL** | **CCC** | | | (F0) |

### M2 mit M1:

| | | | | | | | | |
|---|---|---|---|---|---|---|---|---|
| 5'-3' | | | | **ROT** | **CCC** | | | (M0) |
| 5'-3' | | | | **ROT** | **CCC** | | | (M0) |

### M2 mit M2:

| | | | | | | | | |
|---|---|---|---|---|---|---|---|---|
| 5'-3' | | | | **ROT** | **CCC** | | | (M0) |
| 5'-3' | | | | **ROT** | **CCC** | | | (M0) |

### Ergebnis:

¾ der Nachkommen aus diesen Verbindungen besitzen also das **Merkmal LIL** und nur ¼ das **Merkmal ROT** ,das Verhätnis ist also 3:1 das heisst aber dass **LIL** in diesem Fall dominant ist und **ROT** rezessiv. Vertauscht man LIL mit **ROT,** dann ist damit demonstriert, dass die Eigenschaft eines dominanten oder rezessiven Merkmals nur von der Anordnung der Operatoren D1 D0 und ST abhängt und nicht vom Merkmal selbst.

### Anhang D : Spezielle Anordnungen von D0,D1 und D2 Operatoren und deren Wirkung im 3-dimensionalen Raum bei Monosomie und Trisomie.

Ein weiterer Spezialfall stellt die trisomale Anordnung dar.lm folgenden soll speziell die veränderte Wirkungsweise eines normalerweise dualen Prozesses unter trisomalen Bedingungen anhand der D0,D1,D2,ST Operationen gezeigt werden. Dazu nehmen wir folgenden Ausgangszustand in einer Zelle an, deren DNA-Sequenz den folgenden Abschnitt enthält. Der feminine und maskuline Ursprung sollen in diesem Fall der Einfachheit halber gleiche Codierungen enthalten. D.h der n-te Zustand einer Zelle enthält folgende Codiersequenz. (d0,d1,d2,st, f0, m0.. sind die inversen Codierungen) Dann ergibt unter dualen Gesichtspunkten die folgende Sequenz .

| | | | | | | | | |
|---|---|---|---|---|---|---|---|---|
| 5'-3' | ... | D1 | d2 | st | d0 | D0 | ...... | (F0) |
| 3'-5 | ... | d1 | D1 | ST | D0 | d0 | ..... | (f0) |

| | | | | | | | | |
|---|---|---|---|---|---|---|---|---|
| 5'-3' | ... | D1 | d2 | st | d0 | D0 | ..... | (M0) |
| 3'-5' | ... | d1 | D1 | ST | D0 | d0 | ...... | (m0) |

folgende Ausprägung:

### n-te Zelle

| | | | | | | | | |
|---|---|---|---|---|---|---|---|---|
| 5'-3' | ... | **D1** | **d2** | **st** | **d0** | **D0** | ...... | **(F0)** |
| 3'-5' | ... | d1 | D1 | ST | D0 | d0 | ...... | (f0) |

| | | | | | | | | |
|---|---|---|---|---|---|---|---|---|
| 5'-3' | ... | D1 | d2 | st | d0 | D0 | ..... | (M0) |
| 3'-5' | ... | d1 | D1 | ST | D0 | d0 | ...... | (m0) |

### n+1. Zelle Drehung nach links und Spiegelung

| | | | | | | | | |
|---|---|---|---|---|---|---|---|---|
| 5'-3' | ... | D1 | d2 | st | d0 | D0 | ...... | (F0) |
| 3'-5' | ... | d1 | D1 | ST | D0 | d0 | ...... | (f0) |

| | | | | | | | | |
|---|---|---|---|---|---|---|---|---|
| 5'-3' | ... | D1 | d2 | st | d0 | D0 | ..... | (M0) |
| 3'-5' | ... | d1 | **D1** | **ST** | D0 | d0 | ...... | (m0) |

### n+2. Zelle nochmalige Drehung nach links und Spiegelung ergibt Symmetrie

| | | | | | | | | |
|---|---|---|---|---|---|---|---|---|
| 5'-3' | ... ... | D1 | d2 | st **st** | **d0** | **D0** | ..... | **(F0)** |
| 3'-5' | | d1 | D1 | ST | D0 | d0 | ..... | (f0) |

| | | | | | | | | |
|---|---|---|---|---|---|---|---|---|
| 5'-3' | ... | D1 | d2 | st | d0 | D0 | ..... | (M0) |
| 3'-5' | ... | d1 | D1 | ST | D0 | d0 | ...... | (m0) |

Die Codierfolge ist also dann **A** (1.Chromosom obere Reihe), **a** (2.Chromosom untere Reihe), und

### A (1. Chromosom obere Reihe )

Von oben gesehen sieht dann die Links- bzw Rechtsdrehung folgendermassen aus.

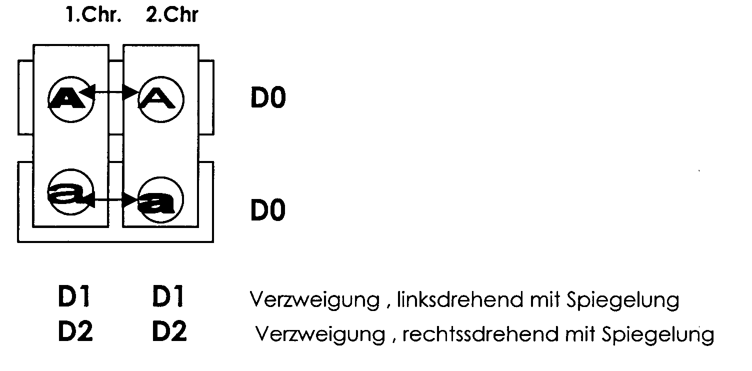

Unter Trisomie versteht man eine Veroppelung eines Chromosomenstrangs der beiden Chromosomen, entweder vom femininen oder maskulinen Teil . Es ist also dann die Codiersequenz im obigen Beispiel, falls der feminine Teil (mittleres) verdoooelt wird durch

### 1.Chromosom

| | | | | | | | | |
|---|---|---|---|---|---|---|---|---|
| 5'-3' | ... | D1 | d2 | st | d0 | D0 | ...... | (F0) |
| 3'-5' | ... | d1 | D1 | ST | D0 | d0 | ...... | (f0) |

### 2.Chromosom

| | | | | | | | | |
|---|---|---|---|---|---|---|---|---|
| 5'-3' | ... | D1 | d2 | st | d0 | D0 | ...... | (F0) |
| 3'-5' | ... | d1 | D1 | ST | D0 | d0 | ...... | (f0) |

### 3.Chromosom

| | | | | | | | | |
|---|---|---|---|---|---|---|---|---|
| 5'-3' | ... | D1 | d2 | st | d0 | D0 | ...... | (M0) |
| 3'-5 | ... | d1 | D1 | ST | D0 | d0 | ...... | (m0) |

definiert.

Die Folge der Zellteilungen ist dann beginnend mit dem mittleren 2.Chromosom folgende:

### n-te Zelle (Ausgangspunkt)

### 1.Chromosom

| | | | | | | | | |
|---|---|---|---|---|---|---|---|---|
| 5'-3' | ... | D1 | d2 | st | d0 | D0 | ...... | (F0) |
| 3'-5' | ... | d1 | D1 | ST | D0 | d0 | ...... | (f0) |

### 2.Chromosom

| | | | | | | | | |
|---|---|---|---|---|---|---|---|---|
| 5'-3' | ... | **D1** | **d2** | **st** | **d0** | **D0** | ...... | **(F0)** |
| 3'-5' | ... | d1 | D1 | ST | D0 | d0 | ...... | (f0) |

### 3.Chromosom

| | | | | | | | | |
|---|---|---|---|---|---|---|---|---|
| 5'-3' | ... | D1 | d2 | st | d0 | D0 | ...... | (M0) |
| 3'-5' | ... | d1 | D1 | ST | D0 | d0 | ...... | (m0) |

definiert.

### n+1. Zelle ( linksdrehend durch D1)

### 1.Chromosom

| | | | | | | | | |
|---|---|---|---|---|---|---|---|---|
| 5'-3' | ... | D1 | d2 | st | d0 | D0 | ...... | (F0) |
| 3'-5' | ... | d1 | **D1** | **ST** | D0 | d0 | ...... | (f0) |

### 2.Chromosom

| | | | | | | | | |
|---|---|---|---|---|---|---|---|---|
| 5'-3' | ... | D1 | d2 | st | d0 | D0 | ....... | (F0) |
| 3'-5' | ... | d1 | D1 | ST | D0 | d0 | ....... | (f0) |

### 3.Chromosom

| | | | | | | | | |
|---|---|---|---|---|---|---|---|---|
| 5'-3' | ... | D1 | d2 | st | d0 | D0 | ...... | (M0) |
| 3'-5' | ... | d1 | D1 | ST | D0 | d0 | ...... | (m0) |

definiert.

### n+2. Zelle:

### 1.Chromosom

| | | | | | | | | |
|---|---|---|---|---|---|---|---|---|
| 5'-3' | ... | D1 | d2 | st | d0 | D0 | ...... | (F0) |
| 3'-5' | ... | d1 | D1 | ST | D0 | d0 | ...... | (f0) |

### 2.Chromosom

| | | | | | | | | |
|---|---|---|---|---|---|---|---|---|
| 5'-3' | ... | D1 | d2 | st | d0 | D0 | ...... | (F0) |
| 3'-5 | ... | d1 | D1 | ST | D0 | d0 | ...... | (f0) |

### 3.Chromosom

| | | | | | | | | |
|---|---|---|---|---|---|---|---|---|
| 5'-3' | ... | D1 | d2 | st | d0 | D0 | ...... | (M0) |
| 3'-5' | ... | d1 | D1 | **ST** | D0 | d0 | ..... | (m0) |

definiert.

Die Codierfolge ist also dann **A** (2.Chromosom obere Reihe), **a** (1.Chromosom untere Reihe), und
**a** ( 3. Chromosom untere Reihe)
Von oben gesehen sieht dann die Links- bzw Rechtsdrehung folgendermassen aus.

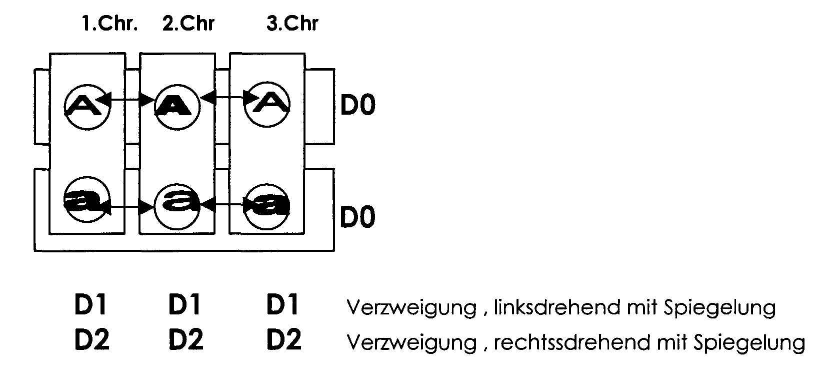

Vergleicht man die Funktionen so kann man erkennen, dass die Ergebnisse stark unterschiedlich ausfallen.

### Funktionen in den Zellen.

### Bei zweifachem Chromosomensatz:

### n-te Zelle

| | | | | | | | | |
|---|---|---|---|---|---|---|---|---|
| 5'-3' | ... | **D1** | **d2** | **st** | **d0** | **D0** | ...... | **(F0)** |
| 3'-5' | ... | | | | | | | |

### n+1. Zelle

| | | | | | | | | |
|---|---|---|---|---|---|---|---|---|
| 5'-3' | ... | | | | | | | |
| 3'-5' | ... | | **D1** | **ST** | | | | |

### n+2. Zelle:

| | | | | | | | | |
|---|---|---|---|---|---|---|---|---|
| 5'-3' | ... | | | **st** | **d0** | **D0** | **......** | **(F0)** |
| 3'-5 | ... | | | | | | | |

### Bei dreifachem Chromosomensatz ( Trisomie )

### n-te Zelle (Ausgangspunkt)

| | | | | | | | | |
|---|---|---|---|---|---|---|---|---|
| 5'-3' | ... | **D1** | **d2** | **st** | **d0** | **D0** | **......** | **(F0)** |
| 3'-5' | ... | | | | | | | |

### n+1.Zelle

| | | | | | | | | |
|---|---|---|---|---|---|---|---|---|
| 5'-3' | ... | | | | | | | |
| 3'-5' | ... | | **D1** | **ST** | | | | |

### n+2. Zelle:

| | | | | | | | | |
|---|---|---|---|---|---|---|---|---|
| 5'-3 | ... ... | | | | | | | |
| 3'-5' | | | | **ST** | | | | |

Das gleiche Beispiel liefert für den einfachen Chromosomensatz ( **Monosomie** ) ausgehend von:

| | | | | | | | | |
|---|---|---|---|---|---|---|---|---|
| 5'-3' | ... | D1 | d2 | st | d0 | D0 | ...... | (F0) |
| 3'-5' | ... | d1 | D1 | ST | D0 | d0 | ...... | (f0) |

folgt:

### n-te Zelle

| | | | | | | | | |
|---|---|---|---|---|---|---|---|---|
| 5'-3' | ... | **D1** | **d2** | **st** | **d0** | **D0** | **......** | **(F0)** |
| 3'-5' | ... | d1 | D1 | ST | D0 | d0 | ...... | (f0) |

### n+1. Zelle Drehung nach links und Spiegelung

| | | | | | | | | |
|---|---|---|---|---|---|---|---|---|
| 5'-3' | ... | D1 | **d2** | **st** | **d0** | **D0** | **......** | **(F0)** |
| 3'-5' | ... | d1 | D1 | ST | D0 | d0 | ...... | (f0) |

### n+2. Zelle . Ausführung von D0 (wurde in den vorherigen Beispielen nicht dargestellt)

| | | | | | | | | |
|---|---|---|---|---|---|---|---|---|
| 5'-3' | ... | D1 | d2 | st st | d0 | **D0** | **......** | **(F0)** |
| 3'-5' | ... | d1 | D1 | ST | D0 | d0 | ...... | (f0) |

Die Codierfolge ist also dann **A** (1.Chromosom obere Reihe), A (1.Chromosom obere Reihe), und
**A** (1. Chromosom obere Reihe )

Von oben gesehen ist dann die Links- bzw Rechtsdrehung mit Speigelung degeneriert, codiert also immer die gleiche Codiersequenz, ist also eine Abbildung auf sich.

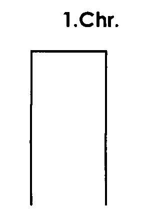

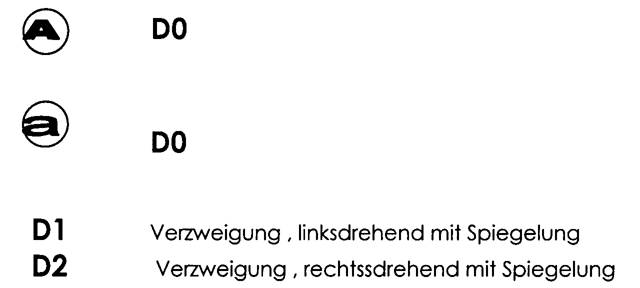

Ebenso unterschiedlich ist die 3-dimensionale Ausprägung im mono- bzw. trisomalen System gegenüber einem dualen System..

## Patentansprüche

1. Verfahren zum Berechnen von chemisch sich selbst reproduzierenden Systemen, **gekennzeichnet durch** die folgenden Merkmale:
- Bereitstellen von Operanden in Form zweier paralleler Befehlsschienen, wobei die auf den beiden Befehlsschienen jeweils einander gegenüberliegenden Befehlspaare aus zueinander komplementären Befehlen bestehen, von denen in einem gegebenen Prozeß höchstens einer ausführbar ist
- Bereitstellen eines Satzes von Operatoren, wobei der Satz von Operatoren mindestens die folgenden Operatoren umfaßt:
a) einen Duplikationsoperator (D0), der den Operanden verdoppelt,
b) mindestens zwei Drehoperatoren (D1, D2), die jeweils eine Drehung des Operanden um eine erste bzw. eine zweite Achse um je einen vorgebbaren Winkel bewirken,
- wobei jeder der Drehoperatoren (D1, D2) jeweils nur einer der Befehlsschienen der Operanden zugeordnet ist und die Anwendung eines der Drehoperatoren auf einen oder mehrere Befehle zu einem anschließenden Wechsel der Befehlsschiene führt.

2. Verfahren nach Anspruch 1, **dadurch gekennzeichnet, daß** ein Stopoperator (ST) vorgesehen ist, der das Ausführen einer Befehlskette beendet, um einen determinierten Endzustand zu erzeugen.

3. Verfahren nach Anspruch 1 oder 2, **dadurch gekennzeichnet dass** ein Aufhebungsoperator (N) vorgesehen ist, der die Wirkung der unmittelbar vorangehenden Anwendung eines der unter a) genannten Operatoren (D0, D1, D2) wieder aufhebt.

4. Verfahren nach einen der Ansprüche 1 bis 3, **dadurch gekennzeichnet dass** die Operanden chemische, z. B. biochemische bzw. biologische Moleküle und insbesondere DNA repräsentieren.

5. Verfahren nach einem der Ansprüche 1 bis 4, **dadurch gekennzeichnet, dass** die Befehle aus jeweils 3 von insgesamt 4 Grundelementen aufgebaut sind, wobei die Grundelemente paarweise zueinander komplementär sind, und je zwei auf den Befehlsschienen parallel gegenüberliegend angeordnete Befehle aus Tripletts von jeweils zueinander komplementären Grundelementen bestehen.
